# EUROPEAN PATENT APPLICATION

(11) **EP 1 416 760 A1**
(43) Date of publication of application: **06.05.2004**
(21) Application number: 02746149.0
(22) Date of filing: 31.07.2002
(51) Int. Cl.: H04Q 9/00

(54) **DEVICE CONTROL APPARATUS AND DEVICE CONTROL SYSTEM**

(30) Priority: 08.08.2001 JP 2001240814; 08.08.2001 JP 2001240815
(71) Applicant: MATSUSHITA ELECTRIC INDUSTRIAL CO., LTD., Kadoma-shi, Osaka 571-8501 (JP)
(72) Inventor: IMAFUKU, Kazuo, Kasuya-gun, Fukuoka 811-2414 (JP); OKAMOTO, Naoko, Itoshima-gun, Fukuoka 819-1335 (JP)
(74) Representative: Grünecker, Kinkeldey, Stockmair & Schwanhäusser Anwaltssozietät
(86) International application number: PCT/JP2002/007791
(87) International publication number: WO 2003/015450

(57) **Abstract**

An apparatus for controlling appliances connectable to a singular or a plurality of target appliances, which apparatus can be approached from a terminal device. The apparatus comprises interface means for exchanging signals with the appliances, memory means having program components folder which stores independent program components by each of the functions, and application generation means which selects necessary program component among those stored in the program components folder to generate a certain specific application that conforms to the function of target appliance. Thereby, even when a new target appliance is added to, an existing appliance is changed or the controllable function of existing appliance is modified, the resultant burden levied on the users and system operators is reduced. And in the present apparatus, the memory media resources are utilized efficiently with least wasting.

## Description

### TECHINCAL FIELD

The present invention relates to apparatus and system for controlling a plurality of electronic appliances (hereinafter referred to as appliances) such as digital cameras and the like imaging appliances, air conditioning devices, microwave ovens and the like cooking appliances, video equipment, digital video disc devices (DVD) and the like audio visual appliances, lamps and lighting facilities, printers, scanners and the like information processing devices, etc. through the internet, CATV or other networks using a terminal device locating remote from the appliances.

### BACKGROUND ART

A number of new technologies has been proposed for controlling the appliances installed at home or in office by means of a terminal device locating at a remote place.

An example of the recent technologies for controlling the appliances is described referring to drawing.

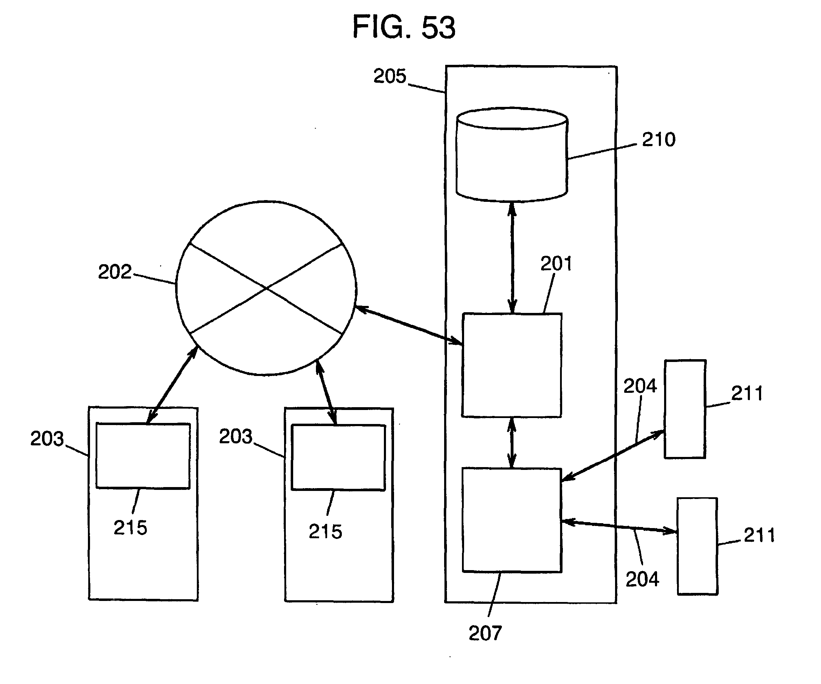

FIG. 53 shows the system structure of a conventional appliances control system.

A terminal device 203 (personal computer, personal digital assistant PDA, etc.) locating at a remote place contains built-in browser display means 215, and is ready for connection to a server 205 via the internet 202.

A plurality of appliances 211, which being the target of control, is connected to the server 205 installed at home or in office via a serial interface 204.

The server 205 comprises a database section 210, an interface section 201 for receiving/transmitting signals with the terminal device 203 via internet 202, and an appliances control section 207 for receiving/transmitting signals with the appliance 211. The database section 210 already stores a control code for making an appliance 211 execute a control item, and a code (HTML code) written in the Hyper Text Markup Language (HTML document) used for exhibiting a control Web page to a user showing the target of control, control item and procedure for issuing a control instruction, by each of the respective target appliances (hereinafter the control code and the HTML code are collectively referred to as control application).

When a user wishes to control an appliance 211 from the terminal device 203, he or she makes access to the server 205 via the internet 202 requesting to send the HTML code needed for exhibiting a control Web page of the appliance 211 to the terminal device 203 out of the database section 210 via the interface section 201. Then, the control Web page appears in the browser display means 215 of terminal device 203.

The control Web page is exhibiting controllable functions with respect to a target appliance 211 as well as the contents of operation in the form of icon. User may select any one of the icons on the Web page to make an appliance 211 conduct a certain specific function or operation.

Upon selection of an icon by a user, a HTML code describing the selected function, operation is sent from the terminal device 203 to the server 205 via the internet 202. The server 205 takes out from the database section 210 a relevant control code in accordance with what is described in the HTML code transmitted from the terminal device 203, and sends it to the appliance control section 207.

The appliance control section 207 sends the control code to the target appliance 211. The appliance 211 executes what is described in the control code.

In the system for controlling appliances as described above, the users have been able to control the appliances 211 locating at remote places with respect to specified operation items using a terminal device 203 (Japanese Laid-open Patent No. H10-51674 is an example).

However, the following drawbacks have arisen with the above-described appliances control system.

Namely, the control code and the HTML code of each of the respective appliances, as well as the image data needed for generating a GUI, have to be stored beforehand in the database section 210 of server 205, covering all the target appliances. Therefore, the database section 210 is required to have an extremely vast memory region.

Keeping entire control application such as the control code, the HTML code, etc. for each of all the controllable appliances in the database section 210 means that the similar programs such as the same control codes or the same GUIs are stored overlapped. This implies an inefficient use of the recording media resources.

Furthermore, at every time when a new target appliance is added to, or an existing appliance is provided with a new function or it is modified, new control code and new HTML code, etc. have to be added to the database section 210.

For facilitating the above-described circumstances of version improvement, new technologies have been proposed in which the necessary control code, etc. are downloaded to respective database sections 210 from a separate server 205 provided on the network, at each time when a new target appliance is added to or modified (Japanese Laid-open Patent No. 2001-53779 teaches an example).

Even in the above system, however, it is far from practicable to download relevant data each time when a new appliance is introduced or the function is expanded, considering a recovery work needed for a possible error in the downloading operation. In addition, under the present status of prevailing communication infrastructure, the downloading work takes a substantially long time. So, the repeated downloading operation can be a substantial burden for the users as well as for the administrators.

Also for a person who is operating an appliances control system (system operator), it has been quite a toil to provide a new control Web page and amend the control code, HTML code, GUI, etc., at each time whenever a new function is added to or modified with each appliance.

In an appliances control system having a home gateway (HGW) for the server 205 for controlling the appliances 211 locating within a house, following additional drawbacks have arisen.

Appliances connected to a LAN are controlled by a remote terminal device making access to a HGW. In order to make the control speed faster, or increase the capability so that it can control more kinds of appliances, the speed of processor built in the HGW needs to be increased and the speed of communication lines also need to be increased. The user is compelled to replace the HGW with a new one and improve the communication lines at each time when he or she wishes to increase the control speed. This has been creating a material burden for the ordinary users at home.

The work of replacing the HGW, downloading a new software, improving the version of a browser software, and such other day-to-day maintenance work like data backup are not a simple and easy job, which have been a big burden for the ordinary users at home.

With the home-use HGW, there is a practical limitation, in view of cost and other factors, to the performance that can be expected in the HGW. Therefore, it has been difficult to implement a control concept that depends a substantial portion of the work for specifying a complicated operation or executing a sophisticated operation on the side of a processor built within a HGW.

### SUMMARY OF THE INVENTION

An apparatus for controlling appliances in accordance with the present invention can be connected to a terminal device and a singular or a plurality of target appliances. It comprises memory means for storing program components, with which components an application for making a target appliance execute a certain function is formed, and application generation means for generating a certain specific application needed to execute a selected function of the appliance, which generation means selecting necessary program component among those stored in the memory means in accordance with an instruction issued by the terminal device for forming the application.

### BRIEF DESCRIPTION OF DRAWINGS

FIG. 1 shows the system structure of a system for controlling appliances in accordance with a first exemplary embodiment of the present invention.
FIG. 2 is a flow chart used to show a method of control with a system for controlling appliances in the present invention.
FIG. 3 shows the system structure of a system for controlling appliances in accordance with a second exemplary embodiment of the present invention.
FIG. 4 shows a program components folder in the second embodiment.
FIG. 5 shows an example of GUI in the second embodiment.
FIG. 6 shows an example of GUI in the second embodiment.
FIG. 7 is a flow chart used to show processing procedure of a pan tilt button program in the second embodiment.
FIG. 8 is a flow chart used to show processing procedure of a pan tilt command program in the second embodiment.
FIG. 9 shows an exemplary description of a pan tilt command program in the second embodiment.
FIG. 10 is a flow chart used to show processing procedure of a zoom button program in the second embodiment.
FIG. 11 is a flow chart used to show processing procedure of a zoom command program in the second embodiment.
FIG. 12 shows an example of users table in the present invention.
FIG. 13 shows an example of target appliances table in the present invention.
FIG. 14 shows an example of devices information table in the present invention.
FIG. 15 shows the system structure of other system for controlling appliances in accordance with the second exemplary embodiment of the present invention.
FIG. 16 shows an example of program description for terminal distinction means in the second embodiment.
FIG. 17 shows the system structure of a system for controlling appliances in accordance with a third exemplary embodiment of the present invention.
FIG. 18 shows an example of description for an ON/OFF button display program in the third embodiment.
FIG. 19 shows an exemplary GUI in the third embodiment.
FIG. 20 shows an example of description for an ON/OFF command program in the third embodiment.
FIG. 21 shows an example of description for a pan tilt button program in the third embodiment.
FIG. 22 shows a program components folder in the third embodiment.
FIG. 23 is a flow chart used to show a method of control with a system for controlling appliances in accordance with a fourth exemplary embodiment of the present invention.
FIG. 24 shows the system structure of a system for controlling appliances in the fourth exemplary embodiment.
FIG. 25 is an example of control command table in the present invention.
FIG. 26 shows the system structure of a system for controlling appliances in accordance with a fifth exemplary embodiment of the present invention.
FIG. 27 is an example of appliances profile table in the present invention.
FIG. 28 is an example of registered appliances table in the present invention.
FIG. 29 is an exemplary layout drawing used to describe the fifth embodiment.
FIG. 30 shows an example of appliance-wise Web page in the present invention.
FIG. 31 shows the system structure of other system for controlling appliances in the fifth exemplary embodiment.
FIG. 32 shows an example of Web page in an embodiment of the present invention.
FIG. 33 is a flow chart used to describe processing steps for remote-controlling the appliances in an embodiment of the present invention.
FIG. 34 shows correlation among the tables in the fifth embodiment.
FIG. 35 shows the system structure of a system for controlling appliances in a sixth exemplary embodiment of the present invention.
FIG. 36 is an example of appliance-wise Web page in a seventh exemplary embodiment of the present invention.
FIG. 37 is an example of appliance-wise Web page in the seventh exemplary embodiment.
FIG. 38 is an example of clickable map data in the seventh embodiment.
FIG. 39 is a flow chart used to show processing flow of a pan tilt script in the seventh embodiment.
FIG. 40 is a flow chart used to show processing flow of specifying a complex control in accordance with an eighth exemplary embodiment of the present invention.
FIG. 41 shows the system structure of a system for controlling appliances in the eighth embodiment.
FIG. 42 is an example of Web page in the eighth embodiment.
FIG. 43 is an example of Web page in the eighth embodiment.
FIG. 44 is an example of a selection page provided for specifying control items in the eighth embodiment.
FIG. 45 is an example of a page provided for specifying the details in the eighth embodiment.
FIG. 46 is an example of a page used to confirm the specified contents in the eighth embodiment.
FIG. 47 is an example of a page used to confirm the specified contents in the eighth embodiment.
FIG. 48 is an example of a page provided for executing a test in the eighth embodiment.
FIG. 49 is an example of a table used to specify a complex control in the eighth embodiment.
FIG. 50 is an example of vector data in a ninth exemplary embodiment of the present invention.
FIG. 51 is an example of registered appliances table in the ninth embodiment.
FIG. 52 is an example of layout drawing in the ninth embodiment.
FIG. 53 shows the system structure of a conventional system for controlling appliances.

### BEST MODE FOR CARRYING OUT THE INVENTION

### (Embodiment 1)

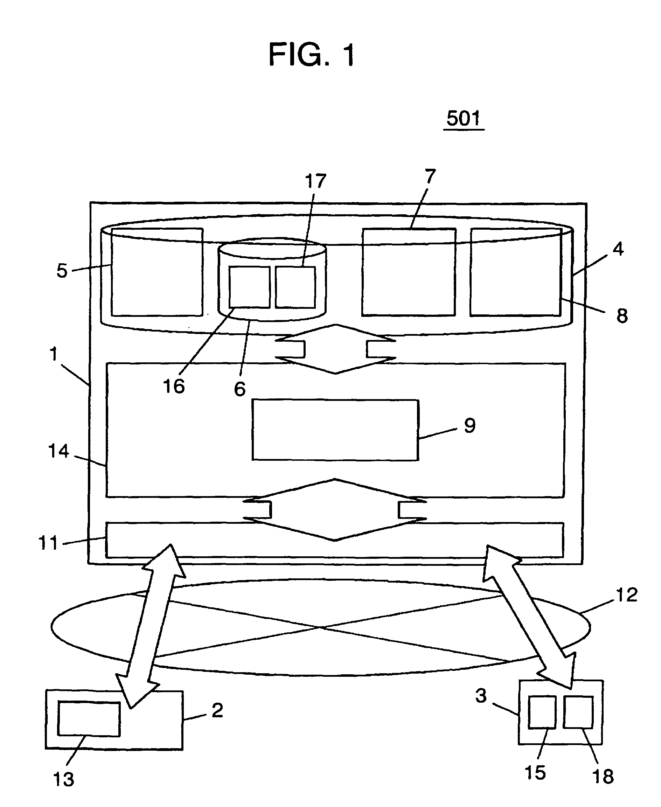

FIG. 1 shows the system structure of a system for controlling appliances in accordance with a first exemplary embodiment of the present invention.

A system for controlling appliances 501 in the present invention can control via a server 1, which server being the apparatus for controlling appliances, a plurality of appliances 3 (in FIG. 1 only one such appliance is shown) connected to the server 1, using a terminal device 2 locating at a remote place.

The appliances 3 and the server 1 are connected through the internet or the like global network (hereinafter referred to as WAN).

An appliance 3 comprises a WWW server or the like communication means 15 for receiving control command from the server 1, and a module of control program 18 for operating the appliance in accordance with the control command received.

The appliances 3 here include all kinds of such electronic appliances as IP cameras, digital cameras, digital video cameras, air conditioners, microwave ovens, television receivers, video recorders, printers, etc. that can receive control command delivered from the server 1.

The terminal device 2 can be a personal computer or a PDA, for example, which is provided with browser display means 13 capable of exhibiting a Web page, and it is connected to the server 1 for mutual exchange of information via WAN 12.

Server 1 comprises at least memory means 4, processing means 14 and interface means 11.

For the memory means 4, a magnetic disc, a magneto-optical disc, a semiconductor memory device or the like readily available data storage means may be used.

Memory means 4 stores a plurality of tables and folders.

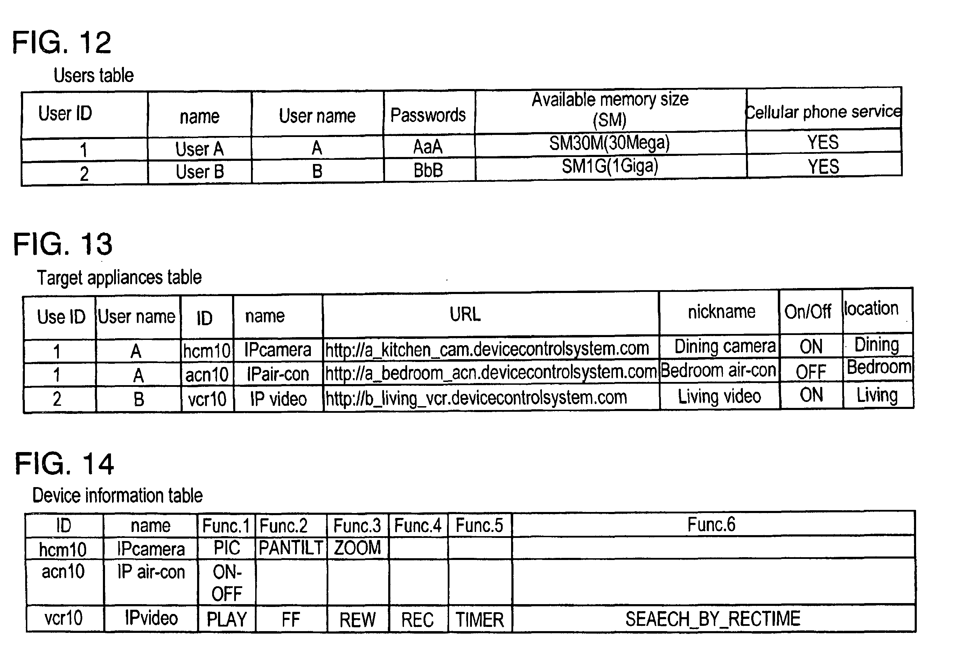

As an example of the tables, FIG. 12 shows a users table 8, FIG. 13 shows a target appliances table 5, and FIG. 14 shows a devices information table 7.

The users table 8 contains information needed for identifying a user who is entitled to make access to the server 1. Included in the information for identification are, e.g. user ID, name, user name (log-in name), amount of region available in the memory means 4 in server 1, passwords and the like information, as shown in FIG. 12.

The users table may further contain a flag information about services offered to users. For example, a users table 8 shown in FIG. 12 contains a flag information as to whether or not a user wishes to have a service for cellular phone (in the table, it is referred to as control service through cellular phone).

The target appliances table 5 contains, user-wise, such information as IDs of target appliances 3, appliance names, URLs, nicknames of the appliances, ON/OFF state of the appliances, places where the appliances are located, etc., as shown in FIG. 13.

The devices information table 7 contains, as shown in FIG. 14, such appliance-wise information (by ID, appliance name, etc.) as the controllable functions.

Now back to the FIG. 1, the program components folder 6 contains, for each of the various control commands, those program components including a control command program 16 written in the PHP Hypertext Preprocessor (hereinafter referred to as PHP) for transmitting the control command to the control program 18 built in an appliance 3, and a button display program 17 written in the Hyper Text Markup Language (HTML) for exhibiting a button GUI, etc. used for executing a control command in the browser display means 13 of terminal device 2. Although only one set of a control command program 16 and a button display program 17 is shown in the drawing, there are more sets of program components corresponding to each of the respective controllable functions.

For the interface means 11, generally-used interfaces, such as Ethernet, ISDN, ADSL, telephone line, serial or parallel interfaces, may be used.

A plurality of appliances 3 (only one of which is shown in the drawing) is connected to the server 1 via the interface means 11.

For the processing means 14, a readily available CPU may be used.

The processing means 14 is loaded with application generation means 9, which being a program for taking necessary information out of the above-described three tables and the program components to combine these into an application.

Next, a method of control with the system for controlling appliances 501 is described.

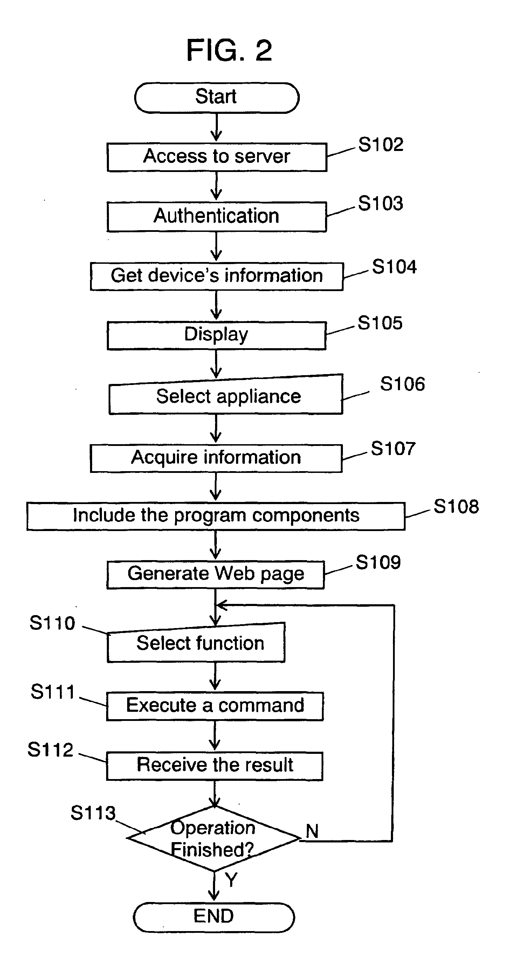

FIG. 2 is a flow chart used to show a method of controlling the appliances in accordance with the present invention.

At step S102 in FIG. 2, a user makes access to server 1 by means of the browser display means 13 of terminal device 2.

At step S103, the server 1 checks, using the application generation means, whether or not the user making access to is among those registered in the users table 8. The user identification may be conducted by a generally-practiced identification procedure using log-in name and password. If the user is confirmed to be among the registered users, it proceeds to step S104.

It is not the intention of the present invention to make any limitation to the method for identifying users. For example, the identification can be conducted by means of biometrics when a user makes the log-in.

At step S104, in response to the user making access to server 1, the processing means 14 acquires information about the type of appliance 3 to which the user is entitled from the target appliances table 5.

At step S105, the application generation means 9 generates, based on information acquired at S104, a picture asking the user to select a target appliance 3 among the plurality of appliances. The picture is displayed in the browser display means 13 of terminal device 2 via interface means 11 and WAN 12.

At step S106, the user selects a target appliance 3 for the control.

Then at step S107, the application generation means 9 acquires information, from the devices information table 7, about the kinds of controllable functions of the appliance 3 selected at S106.

At step 108, the application generation means 9 acquires, from the program components folder 6, the program components relevant to the controllable functions of the target appliance 3; practically described, one program for each of the controllable functions, which program containing a set of the button display program 17 and the control command program 16.

At step 109, the application generation means 9 generates a Web page, using the button display program 43 acquired at S108, showing a menu of controllable functions with the selected appliance 3. The Web page is displayed in the browser display means 13 of terminal device 2 via network.

At step S110, user selects contents of the control he or she wishes.

At step S111, the processing means 14 executes a control command program 16 relevant to the function selected by user at step S110, which control program was already acquired at S108. Consequently, argument of control command, etc. is transmitted to the target appliance 3 via interface means 11. The appliance 3 receives the argument of control command, etc. at the communication means 15, and performs the selected item of control operation at the control program 18. Thus a remote terminal device 2 can make the appliance 3 locating away from it conduct a controlled operation.

Server 1 receives the result of control, at step S112.

At step S113, if the operation is finished or not is judged; if judged finished the operation is terminated. If judged not to have been finished, it returns to the step S110, where user selects the function.

Thus the program components in the present invention may be provided function-wise; namely, they are independent from the difference in the type of appliances 3.

As described in the above, there is no need of installing a new control application, driver, etc. in the server 1 even when a new appliance is added to or the existing appliance is modified. Also, there is no need of providing a new Web page about operation of the appliance added to or modified.

In a case where an existing appliance is provided with an additional controllable function, only a program component related to the added function has to be added, and the data base, etc. re-edited accordingly. There is no need of re-installing the control application and the driver, etc.

Thus, as compared to the conventional systems, the burden of users and system operators is alleviated, at the same time it leads to the economy of memory media resources.

Although the server 1 and appliances 3, as well as the server 1 and terminal device 2, are connected by means of WAN 12 in the present embodiment, the connection between server 1 and appliances 3 or the connection between server 1 and terminal device 2 may of course be made direct with a LAN, serial cable or USB, etc.

Furthermore, a gateway, a router, etc. may of course be placed in the communication route between server 1 and appliances 3.

### (Embodiment 2)

An example of remote-controlling an internet camera capable of transmitting still images (IP camera) using a system for controlling appliances in the embodiment 1 is described as a second exemplary embodiment of the present invention.

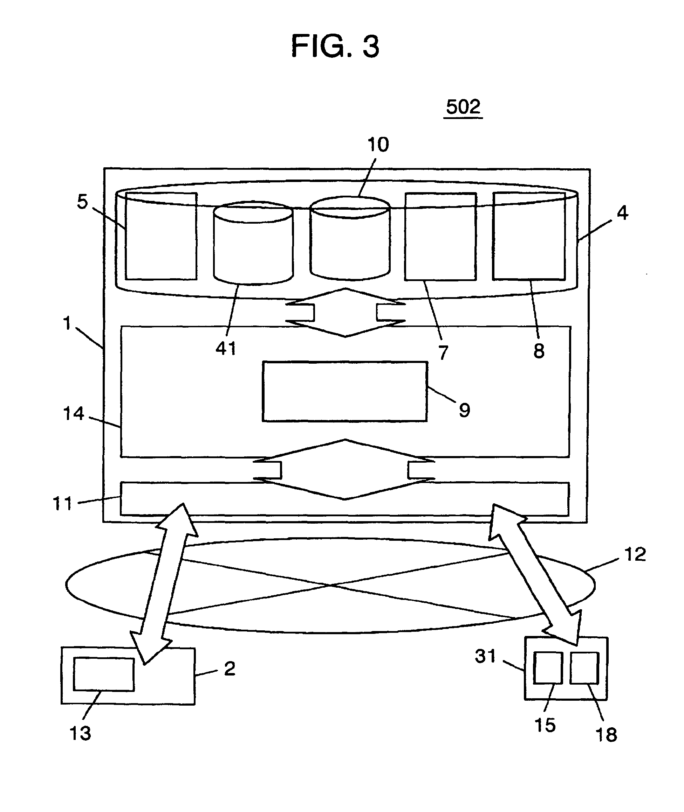

FIG. 3 shows the system structure of a system for controlling appliances 502 in accordance with a second exemplary embodiment. In FIG. 3, those constituent portions having the same functions as those of FIG. 1 are represented by using the same symbols, and the description on which is omitted.

In the system for controlling appliances 502, the memory means 4 is provided with a picture saving folder 10, and the IP camera 31 is connected to server 1 via WAN 12.

An example in which the IP camera 31 is remote-controlled by the terminal device 2 for performing the "pan", "tilt" and "zoom" actions, and saving the still images is described below.

Method of the control is described referring to FIG. 2 once again. Steps from S102 through S104 remain the same as in the embodiment 1; so, description of which steps is omitted here.

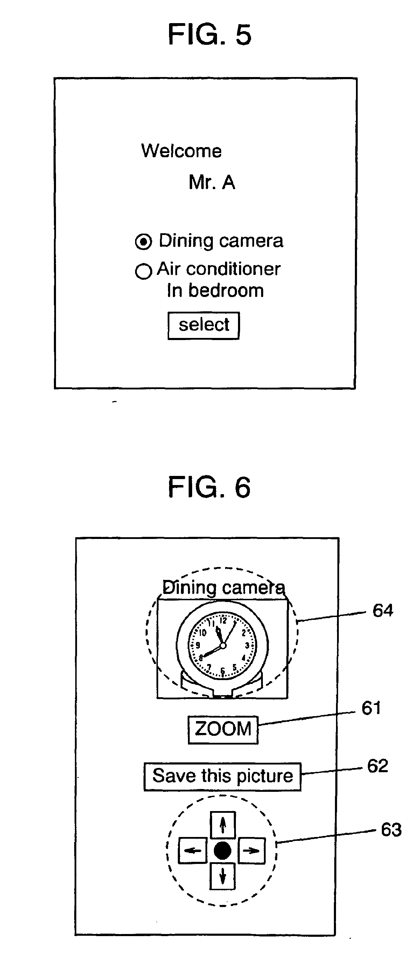

At step S105 in FIG. 2, an operation GUI as shown in FIG. 5 is exhibited in the terminal device 2 at the browser display means 13.

The illustration in FIG. 5 is telling a log-in user A that the user A is entitled to control IP camera 31 and IP air conditioner (not shown). The user A at terminal device 2 is informed by the radio button that either IP camera 31 or IP air conditioner may be selected.

At step S106 in FIG. 2, the IP camera 31 is selected as the target appliance through the radio button of GUI shown in FIG. 5.

At step S107, the functions of IP camera 31 with which the user A is entitled to control, or the operation information, are acquired. After the devices information table 7 of FIG. 14 and the users table 8 of FIG. 12 are referred to, it becomes known that the functions which the user A can control are the "pan", "tilt", "zoom" and "picture saving".

At step S108, the program components required for controlling the IP camera 31 are included, from the program components folder 6, into the application generation means 9 loaded to the processing means 14.

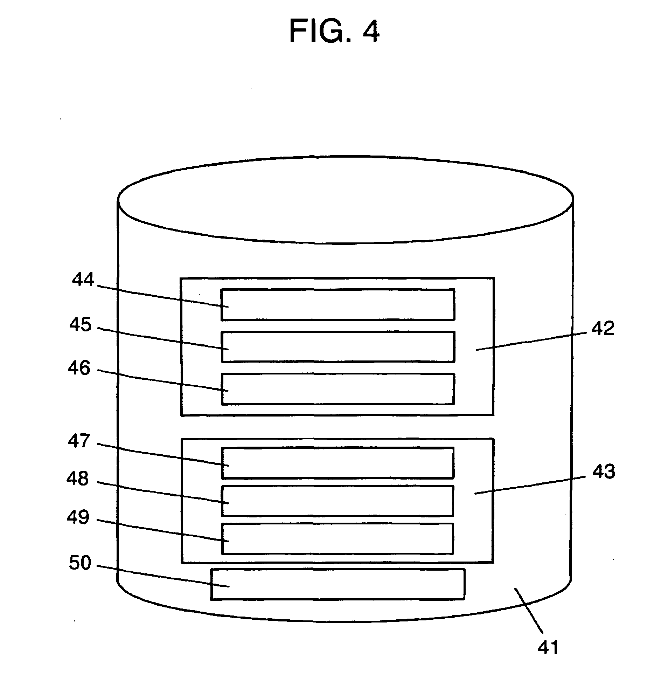

The program components thus included contain the programs needed for performing the "pan", "tilt", "zoom" and "picture saving" actions, as shown in FIG. 4. Those shown in FIG. 4 are part of program components included in the application generation means 9, among the program components stored in the program components folder 41.

For example, the picture save command program 44, the pan tilt command program 45 and the zoom command program 46 written in the PHP language are included as the control command program 42. The picture save button program 47, the zoom button program 48 and the pan tilt button program 49 written in the HTML are included as the button display program 43 to the application generation means 9.

In addition, the picture display program 50 is also included in the application generation means 9 as the program components.

At step S109 in FIG. 2, the terminal device 2 exhibits an operation GUI as shown in FIG. 6 at the browser display means 13.

The operation GUI of FIG. 6 shows a zoom button 61 for zooming the IP camera 31, a pan tilt button 63 for panning or tilting the camera, a picture save button 62, name of the IP camera 31 and a picture display portion 64 for exhibiting the previously taken picture.

The button display program 43 included in the application generation means 9 at step S108 is employed to exhibit the operation GUI of FIG. 6 in the terminal device 2 at the browser display means 13.

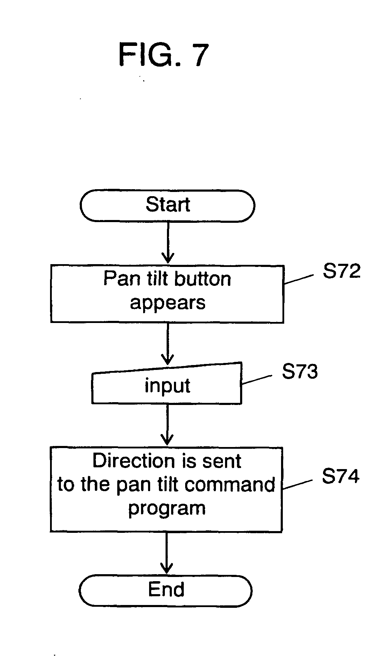

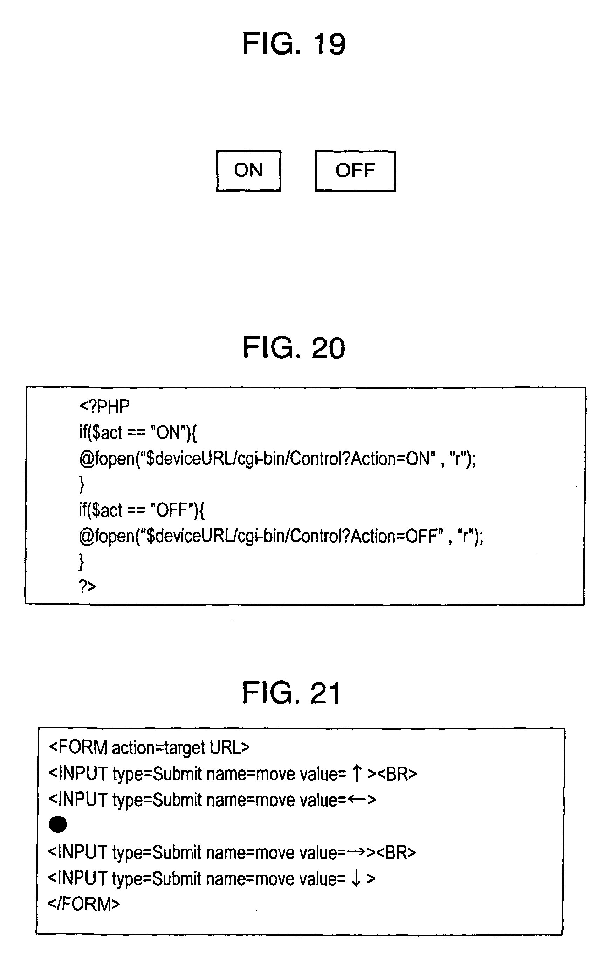

Next, the operation of program components is described referring to the drawings, starting with the pan tilt button program 49. FIG. 7 is a flow chart showing the process flow of pan tilt button program 49; an exemplary description of the program is shown in FIG. 21.

Referring to FIG. 7 at step S72, a pan tilt button 63 appears on the operation GUI exhibited in the browser display means 13.

At step S73, user makes an input (e.g. user designates an upward tilt).

At step S74, the direction of pan tilt (the argument being Move = ↑) is sent to the pan tilt command program 45, which being the control command program of pan tilt function, to complete the process flow of pan tilt button program 49.

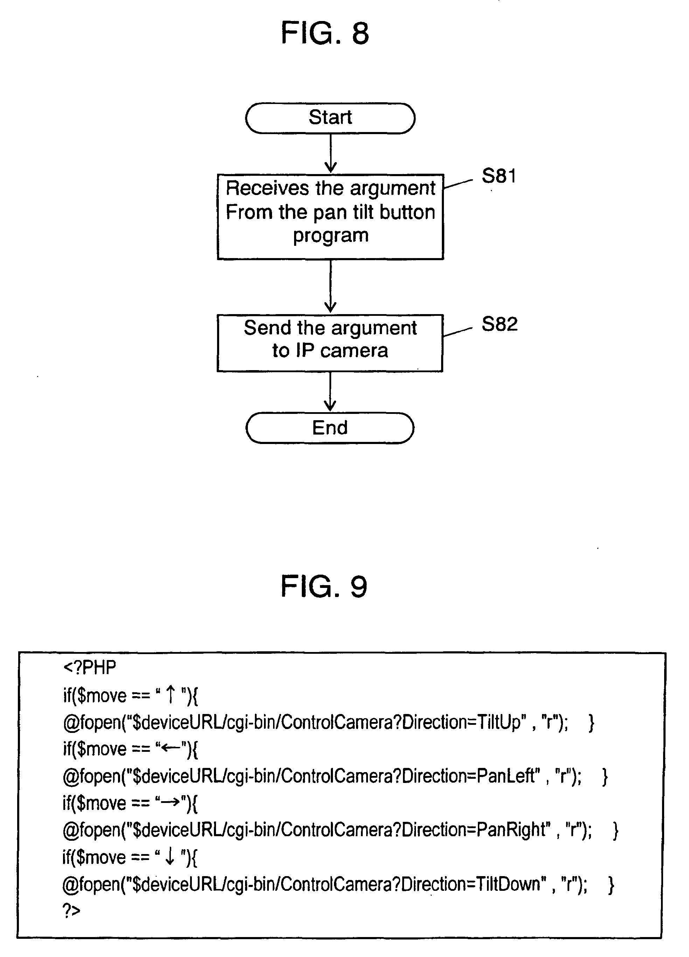

Next, process flow of the pan tilt command program 45 is shown in FIG. 8.

FIG. 9 shows an example of the pan tilt command program 45 written in the PHP program.

At step S81 in FIG. 8, the pan tilt command program 45 receives the earlier-described argument (Move = ↑), which argument being the result of processing performed at the pan tilt button program 49.

At step S82, the argument (Direction = TiltUp) is sent as the control command to the IP camera 31 via interface means 11. Thus it is finished.

In the example of program as shown in FIG. 9; if move = ↑, then the @fopen("$deviceURL/cgi-bin/ControlCamera?Direction=TiltUP","r") ; is executed.

When, the $deviceURL is substituted by an appliance URL described in the target appliances table 5 of FIG. 13 (example: http://a_kitchen_cam. devicecontrolsystem.com).

The IP camera 31 has in the cgi-bin directory of WWW server a control program, ControlCamera. The control program, ControlCamera, receives the earlier-described argument (Direction=TiltUP) for execution.

The IP camera 31 performs actual pan tilt action.

Thus a terminal device 2 locating at a remote place can control the IP camera 31 to make the pan tilt action.

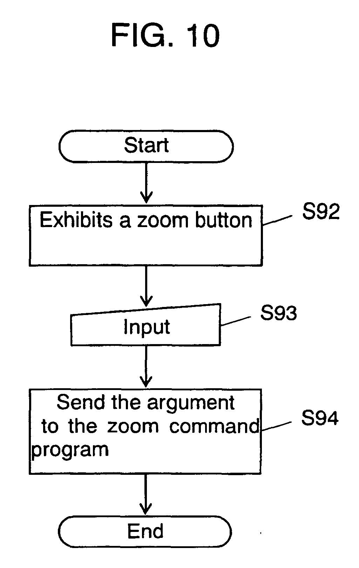

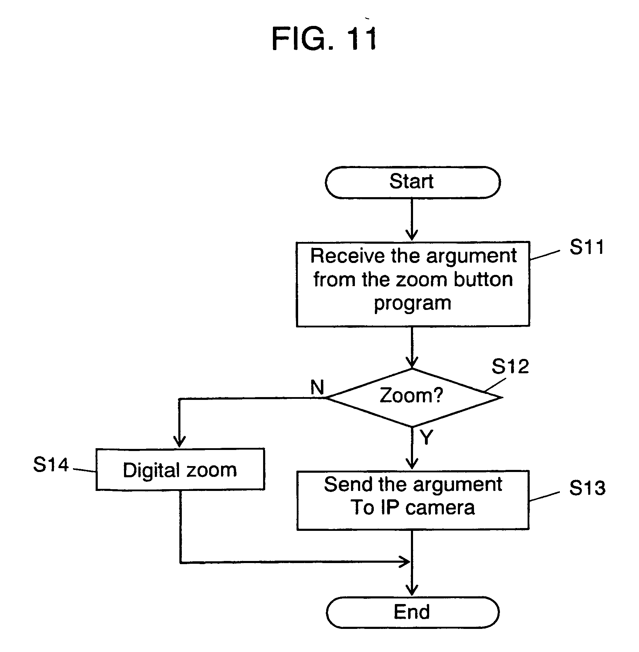

For making the IP camera 31 perform a zooming action, similar procedures as those conducted earlier with the pan tilt button program 49 and the pan tilt command program 45 are followed. FIG. 10 shows process flow of the zoom button program 48, while that of the zoom command program 46 is shown in FIG. 11.

Referring to FIG. 10, the zoom button program 48 exhibits a zoom button 61 in the browser display means, at step S92.

At step S93, upon receiving an input from user, an argument of zooming (Zoom) is sent to the zoom command program 46 (at step S94), and it is finished.

Then in FIG. 11, the zoom command program 46 receives at step S11 the argument from the zoom button program 48.

At step S12, if the target IP camera 31 is equipped with a zooming function is judged. If judged yes, the argument is sent as the control command to the IP camera 31, at step S13, via interface means 11, and it is finished.

Upon receiving the control command (Zoom=zoom1), the IP camera 31 executes the control program to perform an actual zoom-in action.

Like in the case of pan tilt action, a terminal device 2 at a remote place can control the IP camera 31 also with respect to the zooming operation.

An alternative structure may be implemented. Where, the application generation means 9 includes a digital zoom command program which executes digital zooming within the command program at step S14, if the IP camera 31 is judged at step S12 to have no zooming function.

The processing in the above alternative structure remains the same as before until step S11; so, the description on which portion is not made here.

Referring to FIG. 11, when zoom command program 46 receives the argument from zoom button program 48, the zoom command program 46 cuts out a certain part of the picture at step S14 and enlarges it; viz. the digital zooming. The digitally zoomed picture is delivered as the output, and it is finished.

Now, description is made on an example in which a picture shot by IP camera 31 is taken-in. A picture save button 62 as shown in FIG. 6 is exhibited by the picture save button program 47. When the picture save button 62 is selected by user, a picture save command program 44 is started to save the picture. The picture can be stored in a picture save folder 10 in the memory means 4 of server 1.

As described in the foregoing, a set of program components provided function-wise makes it possible to implement an apparatus and system for controlling appliances that works to be independent from the types of the appliances, in so far as the appliances can receive same control commands and arguments. Even in a case when a new appliance is added to or the existing appliance is modified, the server 1 does not need to be re-installed or re-downloaded with new control application, driver, etc. Furthermore, since the same button display program can be shared in common by those appliances having the same function, there is no need of installing or downloading a new program even when an appliance of different type is newly included for the control. Also, there is no need of providing a new operation Web page for the newly included or modified appliances.

By virtue of these advantages described in the above, the toils of downloading and installing of the software related to the newly included or modified appliance are minimized. This alleviates the burden of users and system operators, at the same time it contributes to the efficient utilization of the memory media resources.

Although the picture save command program 44, the pan tilt command program 45 and the zoom command program 46 have been exemplified as the program components, and the picture save button program 47, the zoom button program 48 and the pan tilt button program 49 have been exemplified as the button display program 43 in the present embodiment, it is not the intention of the present invention to limit the program components to the above-described items.

For example, a resolution switching component (consisting of a resolution switching button display program and a resolution switching command program) for changing the resolution level of the IP camera 31 may be added to the control of IP camera 31.

Furthermore, taking a possible introduction of a remote control of IP camera 31 through an "i-mode" or the like portable telephone unit into consideration, there can be such program component as a picture cut out component (consisting of a picture cut out button display program and a picture cut out command program), which component cuts a picture out in accordance with instruction given to the picture exhibited in the telephone unit or the like terminal device. The above-described concept of using such program components also falls within the scope of the present invention, the apparatus and system for controlling appliances.

Although the button display program 43 is written in the HTML document and the control command program 42 in the PHP language in the present embodiment, it is not the intention of the present invention to make any limitation to the language describing the program components. For example, those written with the CGI or other languages also fall within the scope of the present invention, the apparatus and system for controlling appliances.

Considering the way of making access to server 1 by means of a cellular phone, other portable telephone unit or the like terminal device 2, such access is increasing nowadays, the button display program 43 may be provided in line with the browser display means 13 built in the cellular phone or the like portable telephone unit; it may be provided, for example, in the MML document, HDML document, CHTML document, open contents document, etc. By so doing, the access to server 1 will be made available for more varieties of terminal devices 2, including the cellular phones and the like portable unit of other telephone systems.

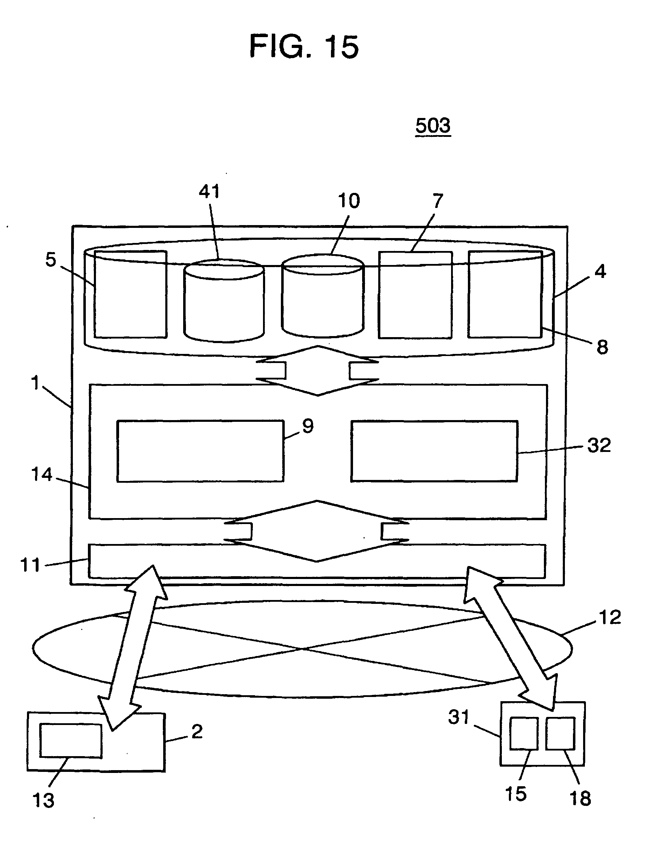

Furthermore, the terminal distinction means 32, a software, may be loaded to the processing means 14, together with the application generation means 9, as shown in FIG. 15, a system for controlling appliances 503. In this system, the kind of browser display means 13 of terminal devices making access to the server 1 can be distinguished by the terminal distinction means 32.

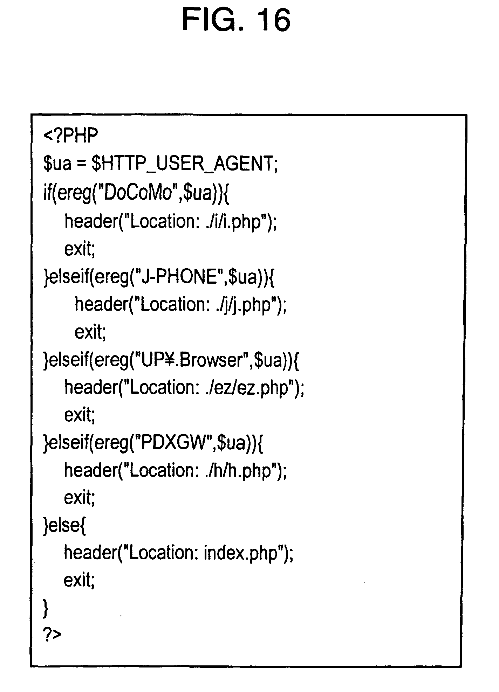

FIG. 16 shows an example of the program description in the PHP language for the terminal distinction means 32.

If such terminal distinction means 32 finds the letters DoCoMo, for example, among terminal information delivered thereto, it employs in the subsequent procedure a button display program 43 provided in advance specifically for the "i-mode".

Other terminal devices 2 likewise undergo the same distinctive procedure, and a button display program 43 that is written with a language corresponding to the kind of browser display means 13 is employed in the subsequent procedure.

In the above-described system in which the terminal distinction means 32 is provided, the user is not requested to register the kind of terminal device 2 before he or she makes access to the server 1 from a cellular phone or the like portable terminal devices. Upon receiving an access from a terminal device, the system is ready to acquire information from the terminal device 2. Thus, various kinds of terminal devices can make access to, and burden at the user side is further alleviated.

### (Embodiment 3)

An apparatus for controlling appliances and the remote control system of the present invention is not limited to the control of IP camera 31 as described in the embodiment 2. It includes the control of all the electronic appliances that can receive the control command.

As an example of the above-described cases, the ON/OFF control of an air conditioner in the power supply performed from a remote terminal device is described as a third embodiment.

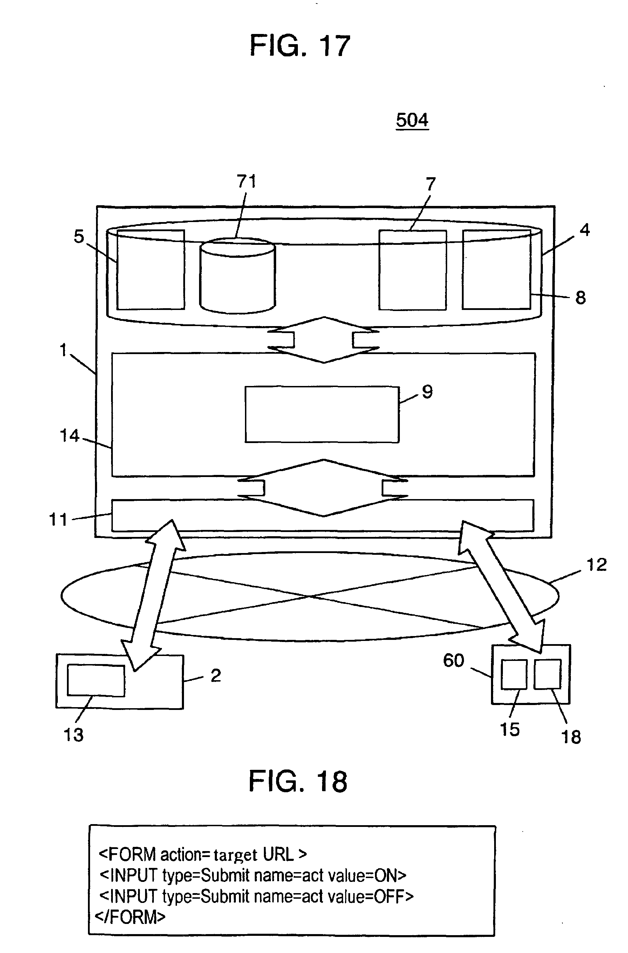

FIG. 17 shows the system structure of a system for controlling appliances in accordance with a third exemplary embodiment of the present invention.

Those constituent portions having the same functions as those of FIG. 1 are represented by the same symbols, and the description on which is omitted here.

In the system for controlling appliances 503, an IP air conditioner 60 is provided with a WWW server for the communication means 15, which server can receive the control command delivered from the server 1. The IP air conditioner 60 is connected to the server 1 via WAN 12.

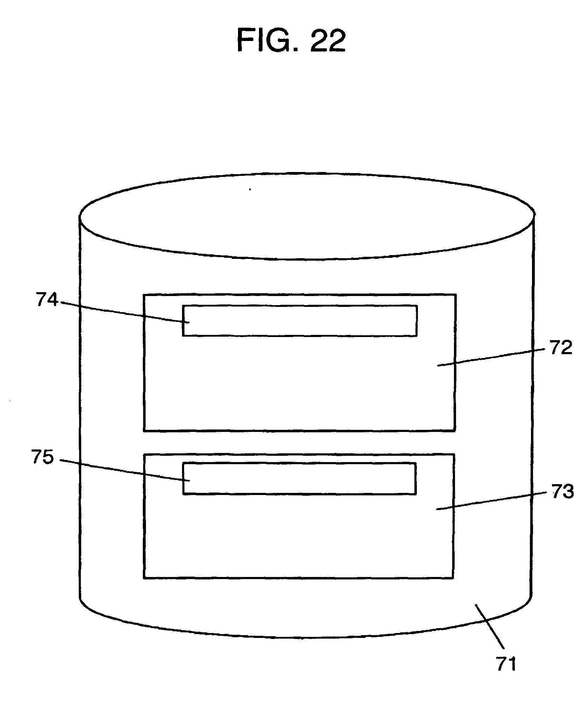

FIG. 22 shows part of the program components included in the application generation means 9, among the program components stored in the program components folder 71.

Referring to FIG. 2 which shows the process flow in the method of controlling appliances in accordance with the embodiment 1, the program components included at step S108 in the application generation means 9 loaded to the processing means 14 are: an ON/OFF button display program 75 for the button display program 73 and an ON/OFF command program74 for the control command program 72, as shown in FIG. 22.

FIG. 18 shows an exemplary description of the ON/OFF button display program 75, while FIG. 20 shows that of the ON/OFF command program 74.

Now back to the FIG. 2 once again to describe the method for controlling the appliances. The ON/OFF button display program 75 as shown in FIG. 18 is executed at step S109. As the result, a GUI as shown in FIG. 19 is displayed in the browser display means 13 of terminal device 2, asking for an instruction, ON or OFF the power supply.

At step S110, when user selects the contents of a control (ON/OFF of the power supply to IP air conditioner 60, in the present example), the argument is sent to the ON/OFF command program 74 for execution.

Describing more practically, if [ON] button is selected in the ON/OFF command program 74 shown in FIG. 18, the data [ON] is sent to [location specified by URL] in the name [act]. In the [location specified by URL], the ON/OFF command program 74 is stored.

In the ON/OFF command program 74 which received the data [ON], the @fopen("$deviceURL/cgi-bin/Control?Action=ON" , "r") ; shown in FIG. 20, is executed.

The $deviceURL here is the one that is shown in the URL column of target appliances table 5; for example,
http://a bedroom acn.devicecontrolsystem.com.

Thereby, the interface means 11 of server 1 requests the control program [Control] existing at the target IP air conditioner 60's directory [cgi_bin] to execute a command [Action=ON] (step S111 in FIG. 2).

The IP air conditioner 60 executes the command [Action=ON] in accordance with a built-in control program to turn the power supply ON.

Thus a terminal device 2 locating at a remote place can control an IP air conditioner 60.

As described in the foregoing, what is delivered from the server in the present invention to various appliances is the argument alone. The same program components can control the appliances of different types, in so far as the control relates to the same function. Consequently, the size of necessary control program can be substantially reduced.

### (Embodiment 4)

In the foregoing embodiments 1 through 3 of the present invention, the location of control program built in the target appliance and the description of command and argument have been given beforehand in the control command program 16.

The present invention can be developed into another system structure for remote-controlling more appliances of various kinds. Such a structure is described in detail as a fourth exemplary embodiment of the present invention.

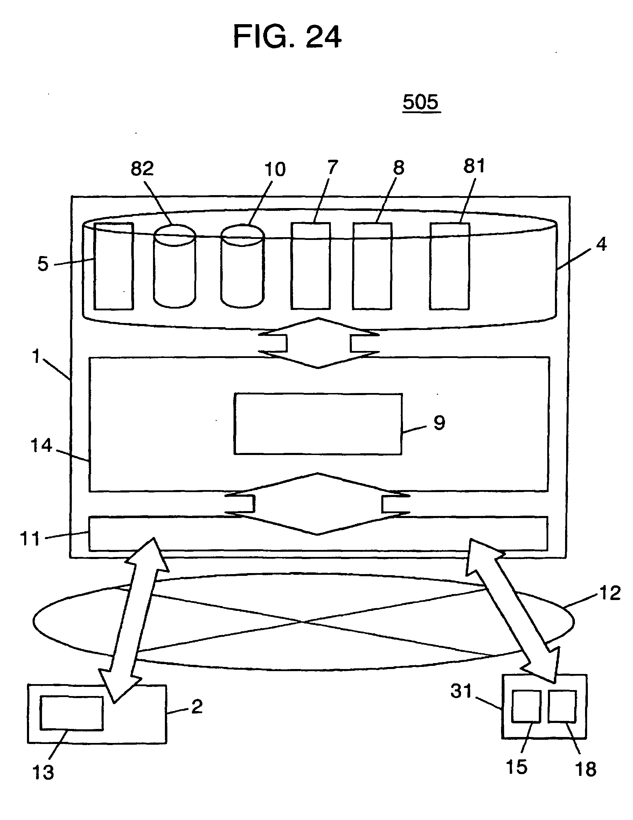

FIG. 24 shows the system structure of a system for controlling appliances in accordance with the fourth embodiment. Those constituent portions identical to those in FIG. 1 or FIG. 3 are represented by the same symbols also in FIG. 24, and the description of which portion is omitted here.

In a system for controlling appliances 505 shown in FIG. 24, the server 1 is further provided with a control command table 81 in the memory means 4.

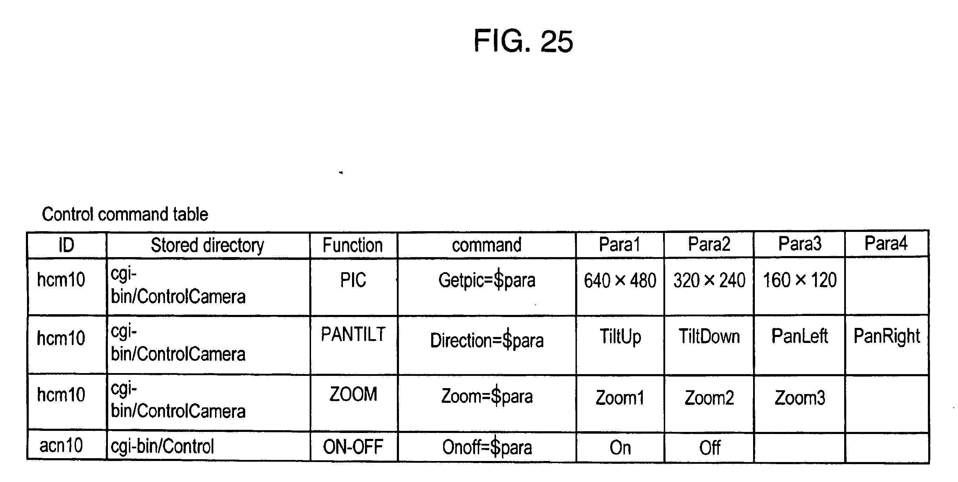

The control command table 81 stores such information as the one shown in FIG. 25.

The control command table 81 stores, by each of the functions of respective remote-controllable appliances, information about the place where the control program of appliance is stored (e.g. directory information), and description of command to be transmitted as well as the argument.

For example, one will understand by referring to FIG. 25 that: if an upward pan tilt is to be performed with an appliance [hcm10], a command [Direction=TiltUp] may be transmitted to the control program [ControlCamera] in the directory [cgi-bin] of [hcm10].

If such control command table is provided, contents of the control command program can be simplified.

A control command program stored in the program components folder 82 is written in the PHP language, and it may contain at least the following description:
@fopen("$deviceURL/$programplace?$Controlcommand", "r").

Next description is made on a method for controlling the appliances using a system for controlling appliances 505, which is provided with the control command table 81.

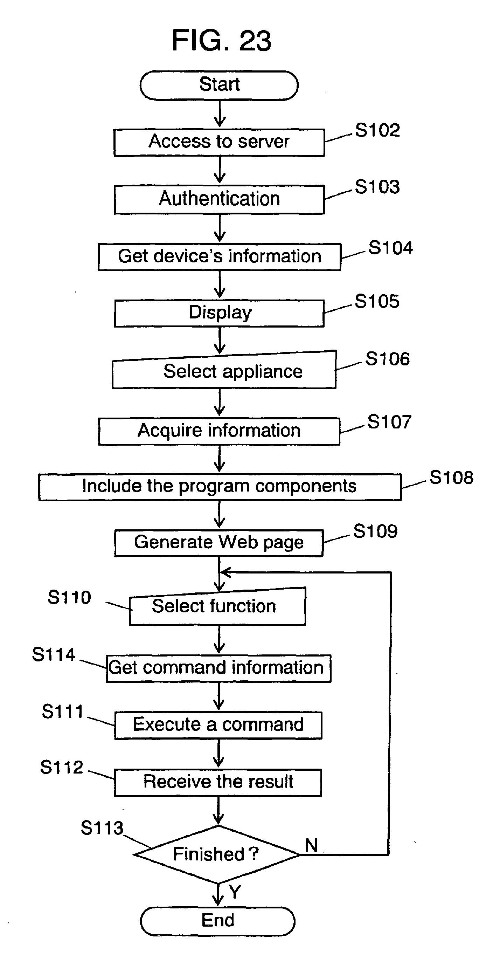

FIG. 23 is a flow chart used to describe the process flow for remote-controlling the appliances using a system for controlling appliances in accordance with a fourth exemplary embodiment of the present invention.

In FIG. 23, those process steps identical to those in FIG. 2 are represented with the same symbols, and the description of which is omitted here.

As compared with other embodiments, the point of difference of the method for remote-controlling the appliances shown in FIG. 23 is that there is a step S114 for acquiring command information of appliance, inserted between step S110 and step S111.

The newly added step S114 is described in detail.

After a function is selected by user at step S110, the control command program refers, at the subsequent step S114, to information in the control command table 81 in accordance with the selected function.

If an appliance hcm10, or IP camera 31, is told to make upward pan tilt operation, the target appliances table shown in FIG. 13 is referred to the portion $deviceURL, which being a variable of control command program reading,
@fopen("$deviceURL/$programplace?$Controlcommand" , "r") ; and
[http://a_kitchen_cam. devicecontrolsystem. com], or URL of the target IP camera 31, is placed.

By the reference to control command table 81, the [cgi-bin/ControlCamera], or the place of control program in IP camera 31, is placed in the portion [$programplace], furthermore, the [Direction=TiltUP] is placed in the portion [$Controlcommand].

Then, the control command program actually executed at the subsequent step S111 is:
@fopen(http://a kitchen cam.devicecontrolsystem.com/cgi-bin/ControlCame ra?Direction=TiltUP " , "r");

Thereby, a command accompanying the argument [Direction=TiltUP] is transmitted to the control program [ControlCamera] stored in the target IP camera 31. Thus a specified action can be performed.

In the above-configured system for controlling appliances 505, more number of appliances 3 of various kinds, e.g. those having different control programs, can be controlled, by additionally writing in the control command table 81 such information about the place of the control program, the control command and the argument, etc. regarding the control programs built in the various kinds of appliances 3.

By so doing, burden of the users as well as the system operators can be alleviated, and the memory media resources can be used efficiently.

### (Embodiment 5)

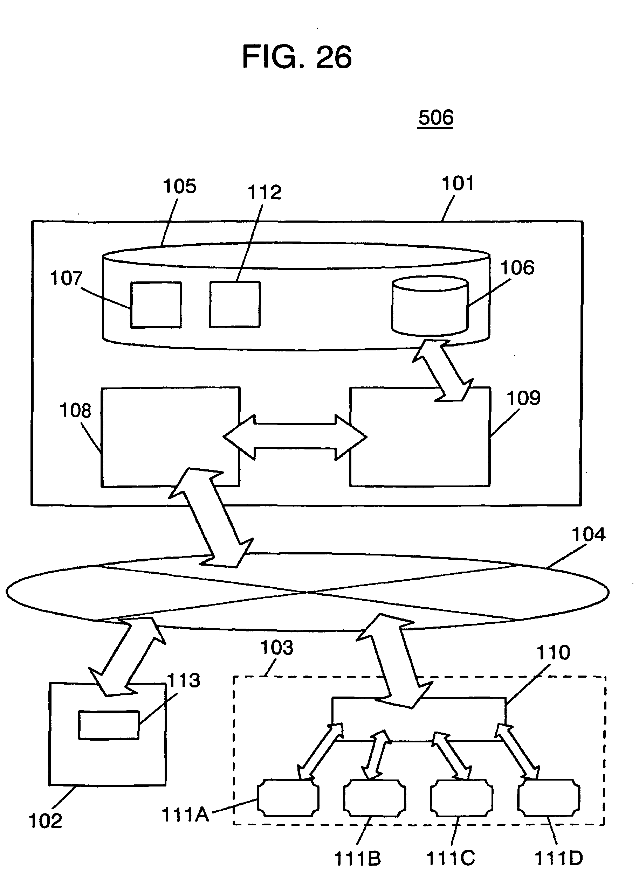

FIG. 26 shows the system structure of a system for controlling appliances in accordance with a fifth exemplary embodiment of the present invention.

A system for controlling appliances 506 in the present fifth embodiment can control a plurality of appliances 111 connected via a home gateway 110 (HGW) to server 101 (among them, only appliance 111A, appliance 111B, appliance 111C and appliance 111D are shown in FIG. 26); which HGW analyzes the network address of appliance control information transmitted from a remote terminal device 102 via the server 101, or the remote control device, and performs a routing operation to a targeted appliance in accordance with the network address.

The appliances 111 and the HGW 110 form a local network 3 (hereinafter referred to as LAN). The HGW 110 and the server 101 are coupled via the internet or the like global network 4 (WAN). Each of the appliances 111 has a WWW server or the like communication means (not shown) for receiving the control command from server 101, and a control program module (not shown) for executing the control command.

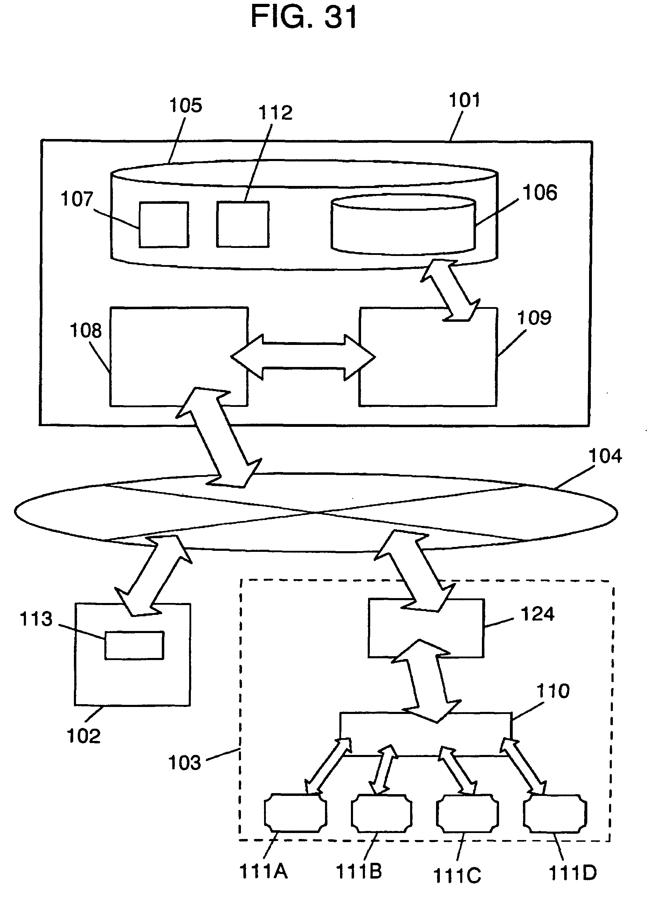

An internet service provider (ISP), a CATV provider or the like service provider 124 may be placed between the HGW 110 and the server 101, as shown in FIG. 31.

Now back to the FIG. 26, the appliances 111 here include all kinds of such electronic appliances as IP cameras, digital cameras, digital video cameras, air conditioners, microwave ovens, television receivers, video recorders, printers, etc. that can receive the control command delivered from the server 101.

The terminal device 102 can be a personal computer or a PDA, for example, which is provided with browser display means 113 capable of exhibiting a Web page. It is connected to the server 101 via WAN 104 for mutual exchange of information.

The server 101 includes at least a database section 105, a Web generation means 109 and an interface means 108.

The database section 105 is disposed in memory means (not shown) of the server 101. For the memory means, a magnetic disc, a magneto-optical disc, a semiconductor memory device or the like readily available data storage means may be used. The memory means stores at least two tables and one database.

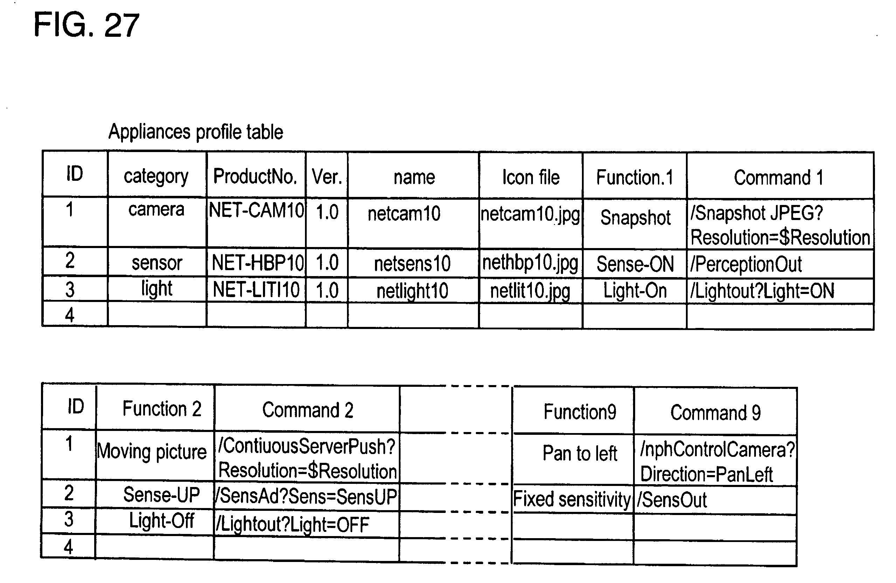

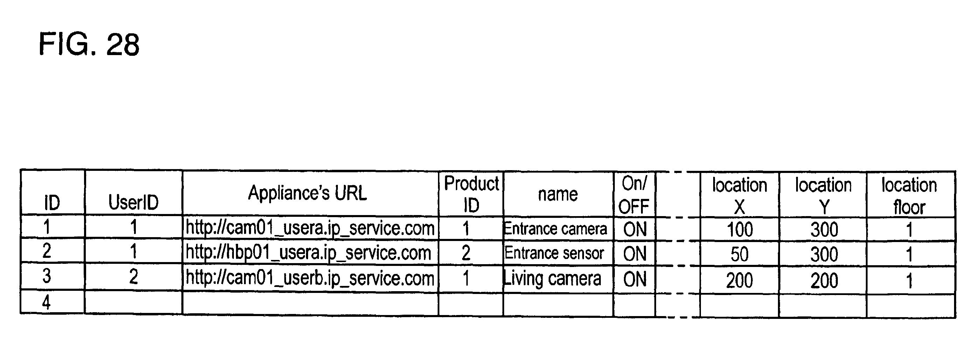

As an example of the two tables, FIG. 27 shows a profile table 107 describing respective appliances, and FIG. 28 shows a registered appliances table 112.

The registered appliances table 112 lists all of the controllable appliances connected, and describes respective appliance ID, registered user ID, URL of controllable appliance (viz. network address of the appliance to be controlled), product ID, appliance name, location information (the X, Y coordinates information, the floor indication of building in which the appliance is placed, etc.), flag information about connection status, controlled state of appliance (in a case of camera, information on the pan tilt state), and other such information.

The location information is referred when an appliance icon is displayed overlapped on an appliance layout drawing, details of which will be described later. The location information teaches, for example, the values in terms of the X axis and the Y axis in a layout drawing with the upper left corner as the point zero, and information about location within a building housing the appliances (in the registered appliances table 112 of FIG. 28, the floor number of building is indicated as the location floor).

The appliances profile table 107 of FIG. 27 stores, by type of the appliances, the information about controllable functions, such as product ID, product category, product number, version, product name, file name of product icon, function name and description of the control command, etc.

Now back to the FIG. 26 once again, the database section 105 further stores a visual map database 106 (hereinafter referred to as visual map DB).

The visual map DB 106 stores layout drawing indicating the place where target appliance 111 is to be located.

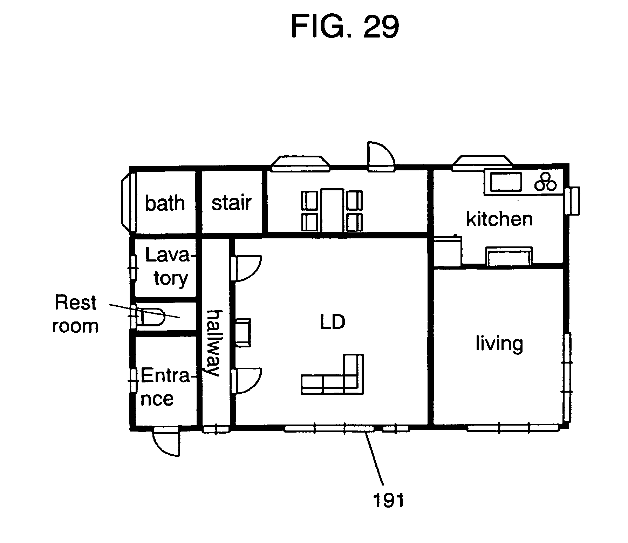

An example of such layout drawing stored in the visual map DB 106 is shown in FIG. 29.

The visual map DB 106 stores a two-dimensional bit map information of layout drawing 191, which provides a two-dimensional room layout indicating a place where an appliance 111 is to be located.

The layout drawing 191 may be provided either by saving the one prepared by a user on the Web, or by scanning an image using a scanner.

Or, the visual map DB 106 may store a so-called drawing system vector data for each of the objects, such as relative location of respective rooms in the layout drawing 191. This point will be described later once again.

For the layout drawing 191, a bit map information such as the one in the BMP form read out by a scanner, etc. may be used as it is. Or, the one converted into the DXF or the like vector data, after analyzing the bit map information, may be stored. The above-described structure will be described later in a ninth embodiment.

Referring to FIG. 26, the interface means 108 can be a generally-used interface, such as Ethernet, ISDN, ADSL, telephone line, serial or parallel interfaces. This enables the server 101 to exchange signals with the external appliances 111 and the terminal device 102.

The processing means (not shown) of server 101 has been loaded with Web generation means 109, which takes necessary information out of the earlier-described two tables and visual map DB 106 and combines them to generate a Web page for controlling the appliances 111.

For the processing means, a readily available CPU for use in a personal computer or workstation may be used.

Next, operation of the system for controlling appliances 506 is described.

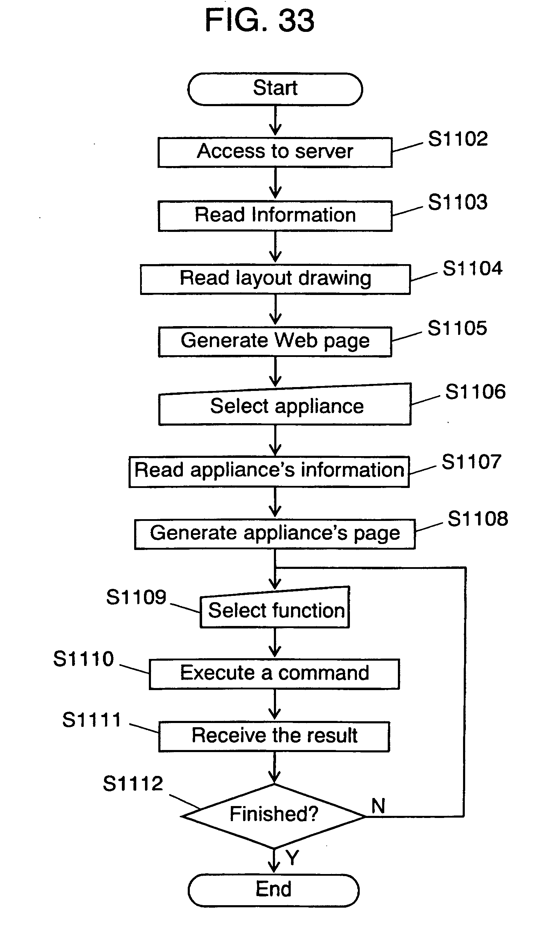

FIG. 33 is a flow chart used to describe a method of remote-controlling the appliances with the system for controlling appliances 506.

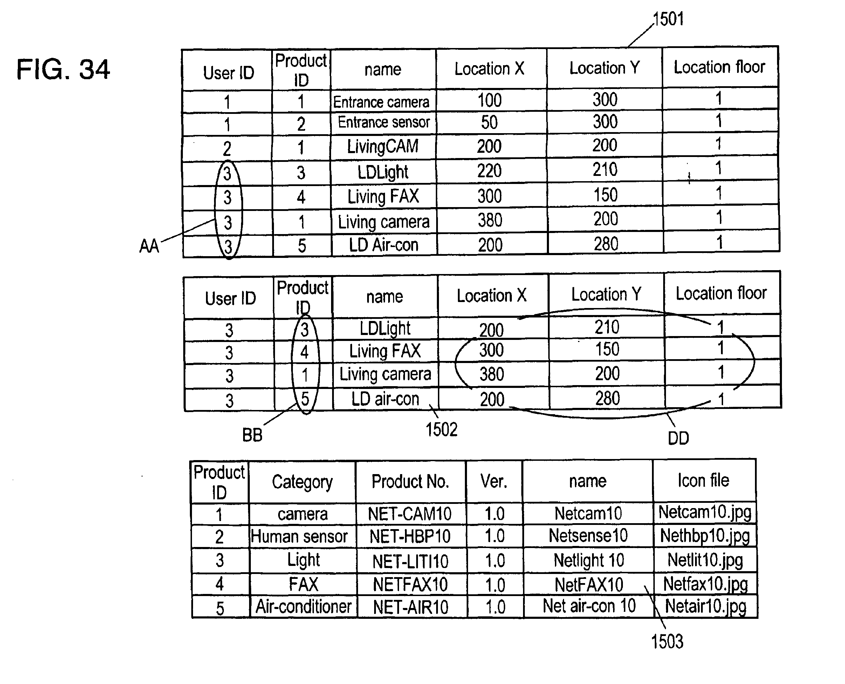

The tables shown in FIG. 34 remain the same as that shown in FIG. 28. FIG. 34 is intended to describe the relationship in data reference between partly-simplified registered appliances table 1501 and appliances profile table 1503. In the following description, both FIG. 33 and FIG. 34 are referred.

At step S1102 in FIG. 33, user makes access to server 101 using a terminal device 102 through the browser display means 113.

At step S 1103, upon the access to server 101 made by the user, all the information about the appliances 111 to which the user is entitled to control is read out of the registered appliances table 112 to be kept at the Web generation means 109 loaded to the processing means.

Describing practically; suppose the user making access to server 101 at step S1102 has a registered user ID [3], the registered appliances table 1501 in FIG. 34 is searched at the column of registered user ID with the [3] as search key (region AA). As the result, an extracted table 1502 is provided. In this way, the appliances available for the user to control are extracted.

At step S1104, the Web generation means 109 reads-in a layout drawing showing the appliance location as shown in FIG. 29, form the visual map DB 106.

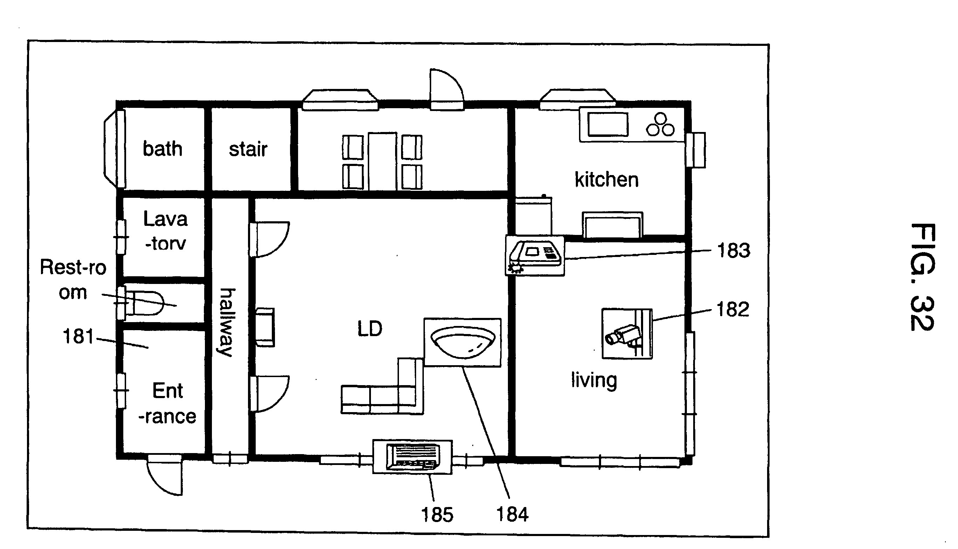

At step S1105, the icon of appliances 111 are displayed overlapped on the layout drawing, on the basis of information acquired at step S1103 and S1104. Thus a Web page as shown in FIG. 32, for example, is generated by the Web generation means 109, asking the user to select a target appliance among the plurality of appliances 111. The Web page is exhibited in the terminal device 102 at browser display means 113, through interface means 108 and WAN 104.

Describing practically, the Web generation means 109 makes reference to the appliances profile table 1503 at step S1105, using the product-wise ID of controllable appliances (region BB) stored in the extracted table 1502 of FIG. 34 as the search key. The Web generation means 109 acquires the file name of icon image, and the appliance icon image in database section 105 acquires the icon images of respective target appliances from the storage directory.

The Web generation means 109 makes reference to location information at the extracted table 1502, such as location X, location Y and location floor, etc. (region DD), and then, based on the location information, exhibits the acquired icon images of respective appliances overlapped on the layout drawing of FIG. 29.

At step S1106 in FIG. 33, user selects a target appliance 111.

At step S1107, the Web generation means 109 reads-in the information about the appliance 111 selected at step S1106, viz. product name, singular or plural function names, singular or plural control commands, etc., from the appliances profile table 107.

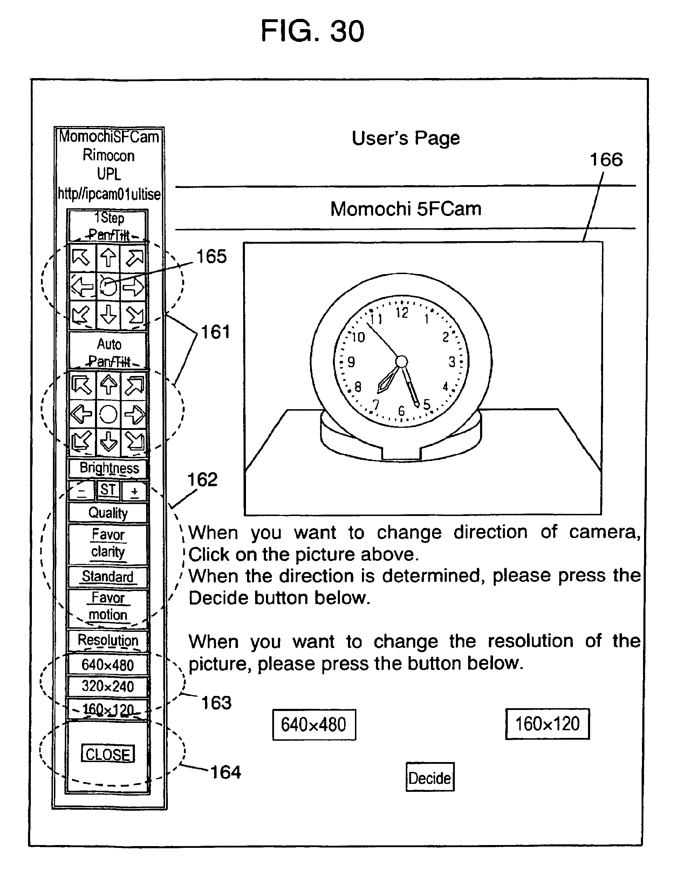

At step S1108, the Web generation means 109 generates an appliance-wise Web page as shown in FIG. 30, for example, which shows menu of controllable functions with the selected appliance 111. It is exhibited in terminal device 102 at the browser display means 113.

At step S1109, user selects the content of a function for control, on the appliance-wise Web page.

At step S1110, a control command for implementing the function selected at S1109 is transmitted from the appliances profile table 107 to the target appliance 111 through interface means 108. The target appliance 111 receives the control command at communication means (not shown), and executes it at the control program module.

Thereby, a certain specific functional operation is performed at the appliance 111. Thus a user can control an appliance 111 with respect to a certain specific function, using a terminal device 102 locating at a remote place.

At step S1111, server 101 receives the results of control operation, transmitted from the target appliance 111.

At step S 1112, if the operation is finished or not is judged.

If judged finished, the operation is ended. If judged not to have been finished, it is returned to the step S1109, where user makes selection on the Web page picture.

Since the layout drawing showing the place where appliances are placed has been stored in the visual map DB 106, and the appliance URL and the location information, which being network address information for specifying selectable appliances, have been stored in the registered appliances table, layout of appliances can be exhibited in a two-dimensional mode as shown in FIG. 32 on a Web page, asking for selecting an appliance. In the system for controlling appliances 506, user can select a target appliance 111 easier at a first sight.

In the system for controlling appliances 506 of the present invention, a terminal device 102 locating at a remote place makes access to the server 101, not HGW 110. This is a point of difference as compared with a conventional system for controlling appliances.

Information about the appliances 111, viz. product name, singular or plural function names, singular or plural control commands, etc. are stored totally in the server 101.

This means that the maintenance work such as updating, addition, modification of control commands, etc. is made by an administrator of the server. Each of the individual users is not requested to do data maintenance regarding those accumulated in the HGW 110. Thus the burden of users is alleviated.

Furthermore, since a HGW 110 is not requested to store the control command, etc. of target appliances 111, it is not necessary for the HGW 110 to keep large memory means. So, the HGW 110 can be structured simple. As a result, a simplified system for controlling appliances can be implemented, which system depending less on HGW 110. Thus, users will not be compelled to renew the HGW 110 very often.

In the examples of present embodiment, there has been a HGW 110, or a couple of HGW 110 and service provider 124, intervening between the server 101 and the appliances 111. However, it is not the intention of the present invention to limit the structure to the above-described configurations. For example, the server 101 and the appliances 111 may be connected direct by WAN 104, the server 101 and the appliances 111 may be connected by a service provider 124 alone, or the server 101 and the appliances 111 may be connected by means of an ordinary LAN using normal cables or optical cables, or direct by serial, parallel, USB, etc.

In the exemplary structure, the server 101 and the terminal device 102 have been connected via WAN 104. However, the server 101 and the terminal device 102 may be connected by means of an ordinary LAN using normal cables or optical cables, or direct by serial, parallel, USB, etc.

Still further, other gateway, router, etc. may of course be placed in the communication channel between the server 101 and the appliances 111, or between the server 101 and the terminal device 102.

### (Embodiment 6)

An example of remote-controlling an internet camera capable of transmitting both the still images and the moving pictures (hereinafter referred to as IP camera) using a system for controlling appliances in accordance with the embodiment 5 is described practically in more details as a sixth exemplary embodiment of the present invention.

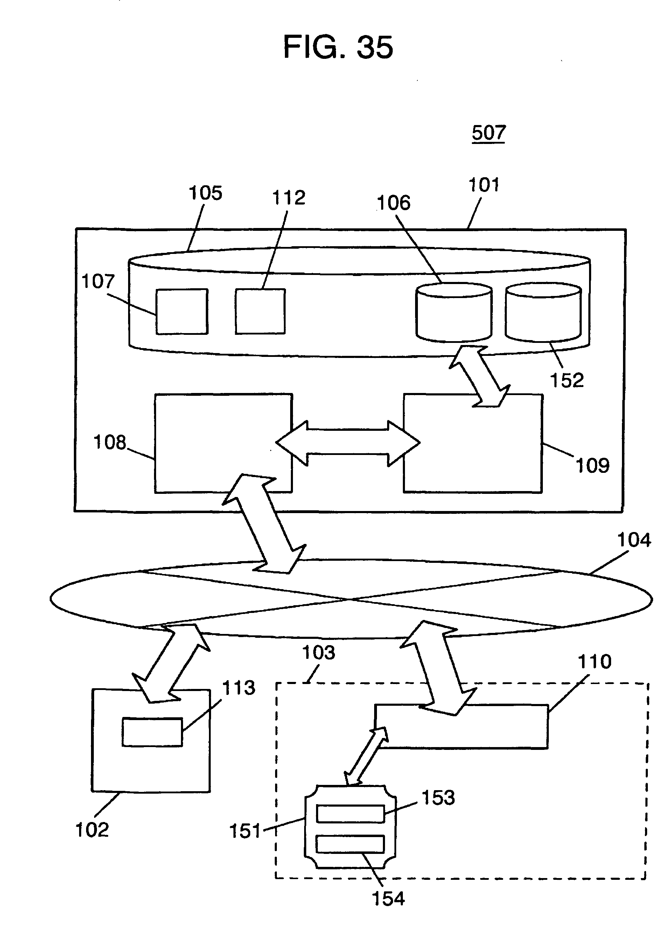

FIG. 35 shows the system structure of a system for controlling appliances in accordance with a sixth exemplary embodiment of the present invention. In FIG. 35, those constituent portions having the same functions as those of FIG. 26 or FIG. 31 are represented by using the same symbols, and the descriptions on which are omitted.

In the system for controlling appliances 507, a database section 105 is provided with a picture save database 152, and an IP camera 151 is connected to HGW 110 to form a LAN 103. The HGW 110 is connected to server 101 via WAN 104.

The IP camera 151 is mounted with a control program module 153 and a still image output program module 154.

Now in the present embodiment 6, description is made on an example where the IP camera 151 is controlled for performing the "pan" and "tilt" to generate still images.

Operation of the system for controlling appliances is described referring once again to FIG. 33. Steps from S1102 through S1104 remain the same as in the embodiment 5; so, the description of which steps is omitted here.

At step S1105 in FIG. 33, Web generation means 109 makes reference to the layout drawing information stored in visual map DB 106 and the location information of target appliance 111 stored in registered appliances table 112, and provides a Web page having an operation GUI as shown in FIG. 32. The Web page can be seen in terminal device 102 at the browser display means 113.

In FIG. 32, an IP camera 182, an IP FAX 183, an IP light 184 and an IP air conditioner 185 are shown in the form of icon overlapped on the layout drawing 181.

At step S1106 in FIG. 33, user designates a target appliance by selecting the appliance icon exhibited in FIG. 32, the Web page.

An icon of IP camera 182, for example, is selected.

At step S1107, the Web generation means 109 reads-in the information needed to control the IP camera 151; for example, function name and control command, etc., from the appliances profile table 107 using the product-wise ID of IP camera 151 as the search key.

At step S1108, an appliance-wise Web page of target appliance as exemplified in FIG. 30, generated by the Web generation means 109, is made available in terminal device 102 at the browser display means 113.

The appliance-wise Web page in FIG. 30 shows, in the left alley, a remote control section for controlling the IP camera 151, viz. pan tilt button 161 for conducting pan or tilt with the IP camera 151, image quality adjust button 162 for adjusting quality of the image, resolution switching button 163 for switching the resolution level, and closing button 164 for closing the appliance-wise Web page, etc. In the space in the right, information received from the IP camera 151, a still image 166 in the present case, is exhibited.

Suppose an instruction for panning to the left is selected (pan left button 165 in FIG. 30 is selected), the relevant control command is searched among those information related to the target IP camera 151 stored in the appliances profile table 107, using function name as the search key.

When making the IP camera 151 perform a pan left action, for example, appliance information about the IP camera 151 is extracted out of the appliances profile table 107 of FIG. 27; viz. the information stored in the first line thereof. Among the information thus extracted, the corresponding control command [/nphControlCamera?Direction=PanLeft] is selected (control command 9), using function name [panleft] (function name 9) as the search key.

This is a control command telling to send an argument [Direction=PanLeft] to the control program module 153 [nphControlCamera] built in the IP camera 151, or the target appliance.

The control command is transmitted to the IP camera 151, accompanied by an appliance URL which being network address information for specifying a target appliance, viz. the IP camera 151, in the present example, selected from among the registered appliances table.

Now back to the FIG. 33, the control command is executed at step S1110, as described earlier. In practice, the argument [Direction=PanLeft] is sent to the control program module 153 [nphControlCamera] built in the IP camera 151.

When, at the target IP camera 151, the [Direction=PanLeft] is executed at the control program module 153 [nphControlCamera]. The IP camera 151 performs a pan action for 1 step to the left.

At step S1111, the server 101 receives the result of the control.

Whether the operation is finished or not is judged at step S1112. If it is judged finished, the operation is ended. If judged not to have been finished, it is returned to the step 1109, an appliance-wise Web page which asks user to select an operation.

Thus a terminal device 102 locating at a remote place can control an IP camera 151.

In the above system for controlling appliances 507, since the layout drawing showing the place where appliances are placed has been stored in the visual map DB 106, and the layout information about selectable appliances has been stored in the registered appliances table, layout of appliances can be exhibited in a two-dimensional mode as shown in FIG. 32 on a Web page, asking for selection of an appliance. The user can select a target appliance 111 easier at a first sight for controlling it from a remote place.

As compared with a conventional system for controlling appliances, the access from a remote terminal device 102 is made to server 101, not HGW 110, and all the information about appliances 111, namely, product name, singular or plural function names, singular or plural control commands, etc. are stored in the server 101. This means that updating, addition, modification of control commands, etc. is made by an administrator of the server. Each of the individual users is not requested to do data maintenance regarding those accumulated in the HGW 110. Thus the burden of users is alleviated.

Furthermore, since a HGW 110 is not requested to store the control command, etc. of target appliances 111, it is not necessary for the HGW 110 to keep large memory means. So, the HGW 110 can be structured simple. As a result, a simplified system for controlling appliances can be implemented, which system depending less on HGW 110 in the processing capacity. Thus, the needs for often renewing the HGW 110 can be lessened.

### (Embodiment 7)

In a system for controlling appliances in accordance with the present invention, appliances 111 locating at remote places are operated through a server 101. The appliances are remote-controlled with respect to the functions which are controllable by the built-in program module. The concept of the present invention further enables to make the appliances perform a complex operation, or a combined control of the above functions, which operation was conventionally difficult to perform. In the present seventh embodiment, an example of such complex operations is described practically.

In a seventh exemplary embodiment of the present invention, description is made on an example where the pan tilt actions are controlled through a clicking applied on an actual picture taken by an IP camera 151 during control procedure of the embodiment 6.

This is an example where a server 101 conducts a multi-step pan tilt with an IP camera 151 provided with a controllable function of 1-step pan tilt action.

The system structure of a system for controlling appliances in the present embodiment 7 remains the same as that of embodiment 6, so the description of which is eliminated here.

Operation of the system for controlling appliances in the present embodiment is described with reference to FIG. 33, which was used in the embodiment 6. The process steps from S1102 through S1107 remain the same as before, so the description of which part is omitted here.

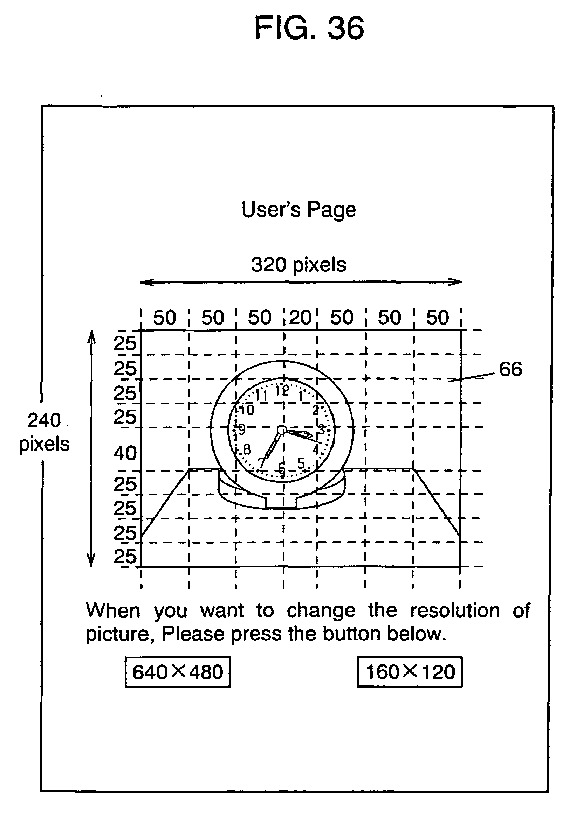

At step S1108, an appliance-wise Web page as shown in FIG. 36 is exhibited, which Web page is formed of a still image 166 taken and saved beforehand with the IP camera 151 and a clickable map called image1 inlaid therein.

The exhibited still image 166 is divided vertically into 9 and horizontally into 7, making a total of 63 blocks. Each of the blocks is specified with respective number of change steps. There is a description in the HTML document needed to exhibit an appliance-wise Web page that the specified number of change steps is handed to a script written in the PHP language (an example here is: [psnapindex.php3]), which transmits the pan tilt control command to the camera upon clicking on any one of the blocks. Thereby, the IP camera 151 can be controlled to execute a multi-step pan tilt from a remote place. More practical description follows.

The still image 166 is exhibited in a remote-controlling user terminal device 102 at the browser display means 113 by an <IMG> tag, which reads
<IMG SRC='http://cam01_usera.ip_service.com/SnapshotJPEG?Resolution= 320x240 'usemap= '#image1' ismap>. The clickble map inlaid in the image is assumed to have a name, '#image1'.

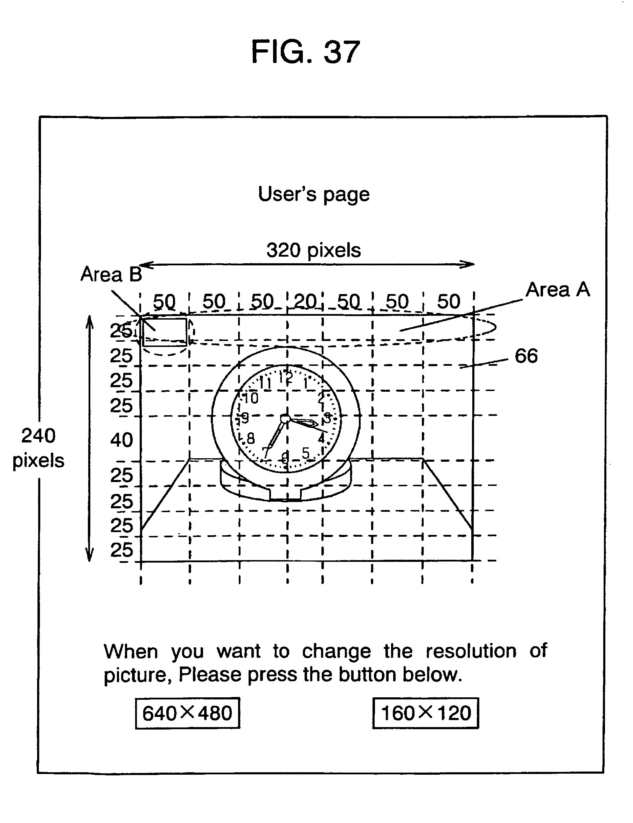

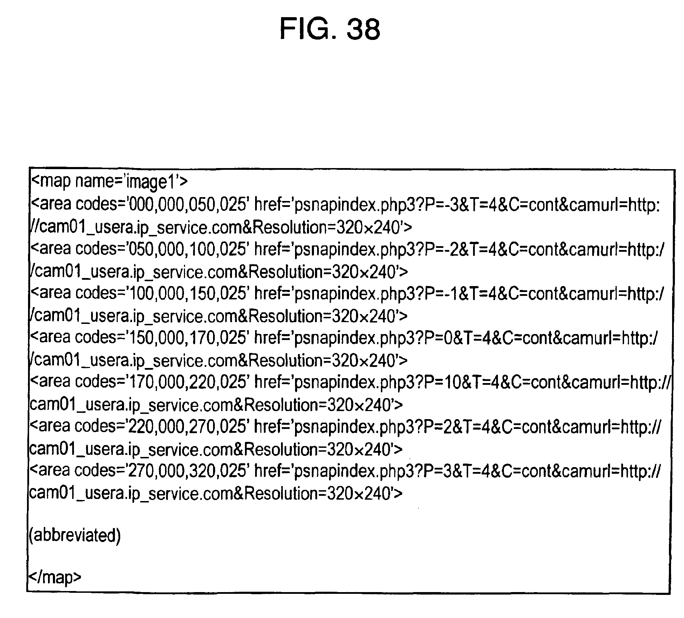

Referring to the drawing meshed as shown in FIG. 37, an example of clickable map data '#image1' of region A is shown in FIG. 38.

In the above clickable map data, that of region B (hereinafter referred to as clickable data) is written in the following manner:
<area cords= '000, 000, 050, 025' href='psnapindex.php3?P=-3&T=4&C =cont&camurl=http://cam01_usera.ip_service.com&Resolution=320x240'>

When the top left edge of the image is clicked, the argument after the ? is handed over to the PHP language script [psnapindex.php3], and executed accordingly.

In the above data, the P=-3 signifies executing the panleft for 3 steps. The T=4 is executing the tiltup for 4 steps. C=cont means that the image was clicked on. In this case, it means that it is in the pan tilt control mode.

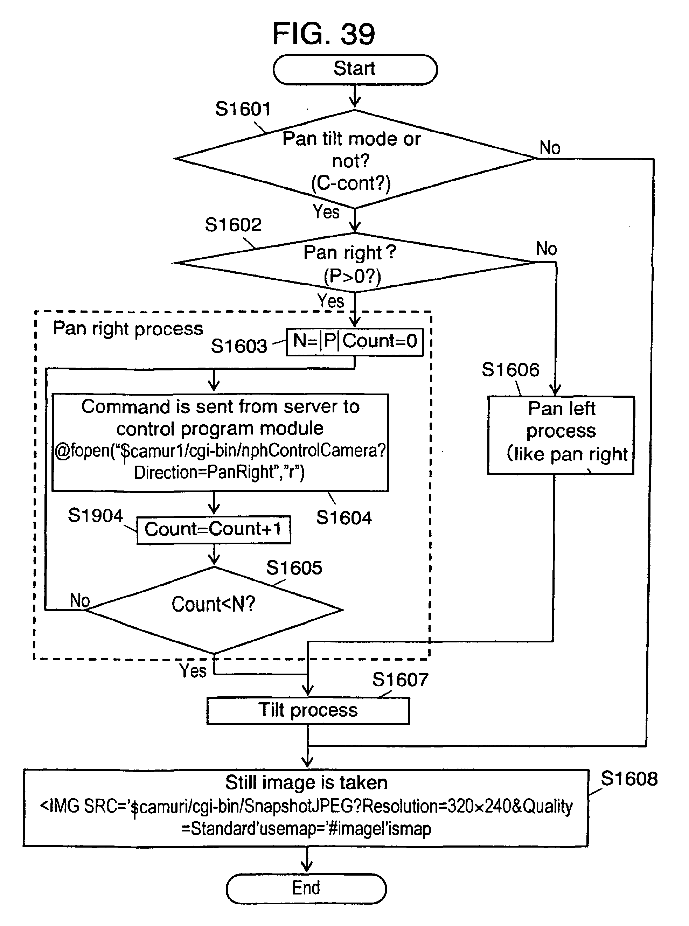

Next, detailed description is made on the script [psnapindex.php3] (pan tilt script). The pan tilt script contains a description of the process flow as shown in FIG. 39.

At step S1601, a judgement is made as to whether it is pan tilt mode or not. Practically, whether or not there is a description C=cont in the clickable data is judged.

At step S1602, whether the specified pan is towards the right or the left is judged. Practically, whether the variable P in clickable data has a positive value or not is judged.

If the value P is judged to be positive at step S1602, then the variable N is substituted with the absolute value of P, and the value of counter Count is substituted with 0, at step S1603.

At step S1604, a control command accompanying an argument Direction=PanRight is sent from server 101 to the control program module 153, nphControlCamera, in accordance with a control program built in the IP camera 151, which is written as shown below in the PHP language :
@fopen("$camurl/cgi-bin/nphControlCamera?Direction=PanRight", "r").

The $camurl is a network address information specifying IP camera 151, and it is substituted with a URL of the IP camera 151 selected from the registered appliances table.

At step S1904, the counter Count is incremented. At the subsequent step S1605, if a variable N is greater than the counter Count or not is judged. If Yes, it proceeds to step S1605; if No, it is returned to the step S1604.

Namely, the IP camera 151 repeats the panning action for the number of times the user wishes to.

The above-described procedure from step S1603 through step S1605 is the pan right process. If at step S1602 the pan is indicated to be towards the left, viz. the value of variable P is negative, then it follows a pan left process described at step S 1606.

The pan left process at step S1606 is the same as that of the earlier-described pan right, except that the following program is executed at the step S1604:
@fopen("$camurl/cgi-bin/nphControlCamera?Direction=PanLeft" , "r") .
The panning action is performed leftward for the number of times the user wishes to.

Next, at step S1607, a tilt process is performed, which process basically proceeds in the same manner as those for the pan right and pan left.

The processing contents for the tilt are the same as those for the pan right and the pan left. For the tilt upward, for example, the [Direction=TiltUP] is sent to the control program; while a command [Direction=TiltDown] is sent for the downward tilt. The remaining procedure remains the same, so the description of which is omitted here.

At step S1608, a still image from the IP camera 151 is taken in for the display in the picture. In practice, the contents of following description are executed:
<IMG SRC='$camurl/cgi-bin/SnapshotJPEG?Resolution= 320 x 240 & Quality =Standard' usemap='#image1' ismap>.

With the above description, a command accompanying the argument [Resolution=320x240&Quality=Standard'usemap='#image1'ismap] is sent to the target IP camera 151 at the still image output program module 154 [SnapshotJPEG], and the pan tilt script is ended.

The present invention allows a server 101 to provide an appliance-wise Web page, in which the earlier-described clickable mapping, for example, can be freely written.

Even in such a case where an IP camera 151 itself is provided with only a 1-step pan tilt function, for example, the present invention makes it possible to make the target appliance 111 perform a multi-step pan tilt action at one control action.

In the present embodiment, the description for exhibiting an appliance-wise Web page is the HTML document, and the pan tilt script has been written in the PHP language. However, it is not the intention of the present invention to make any limitation to the languages used. For example, those written with the CGI or other languages of course fall within the scope of the present invention, the apparatus and system for controlling appliances.

Taking the recently-increasing way of making access to server 1 by means of a cellular phone or the like portable terminal device 2 into consideration, if the Web pages or the appliance-wise Web pages are written in the MML document, HDML document, CHTML document, open contents document, etc. in conformity with the browser display means 13 built in cellular phone or the like terminal devices, the access to server 101 will be made available from more kinds of terminal devices 102 including the cellular phones and the like portable terminal devices.

### (Embodiment 8)

In a system for remote-controlling appliances in the present invention, a Web page showing the icon of target appliance overlapped on, for example, a two-dimensional sketch of room interior structure is exhibited. This facilitates a user to readily instruct, at the first sight of such Web page, plural appliances to perform a coordinated action in their respective functions. For example, telling to turn a room lamp ON as soon as soon as an IP camera detects a moving object. Or, an operation by plural appliances, for example, turning a lamp of service entrance ON whenever a entrance lamp is turned ON, can be specified. In the following description, contents of such a control are referred to as a complex operation.

An example of specifying a complex operation to be performed by a plurality of target appliances using the apparatus and system for controlling appliances in the present invention is described below, as an eighth exemplary embodiment of the present invention.

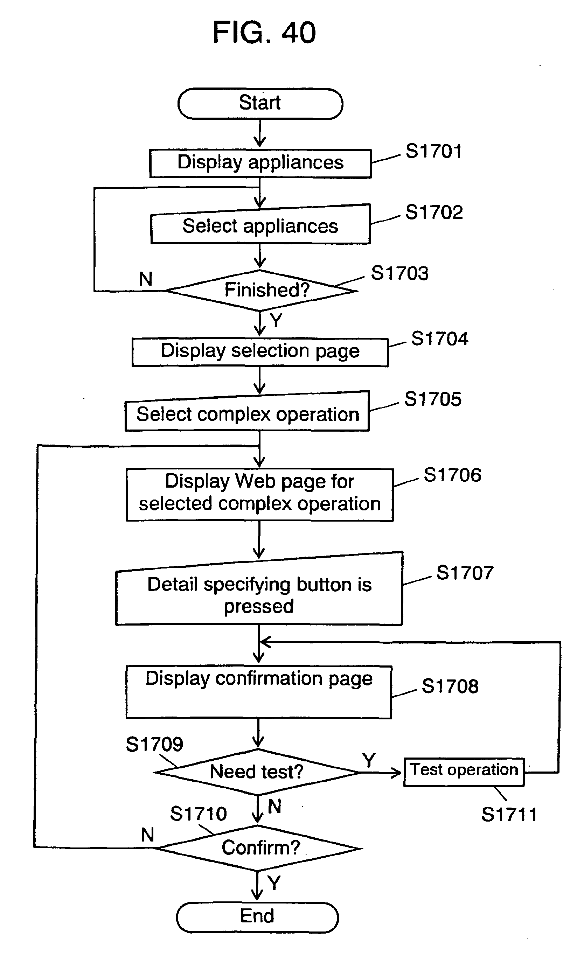

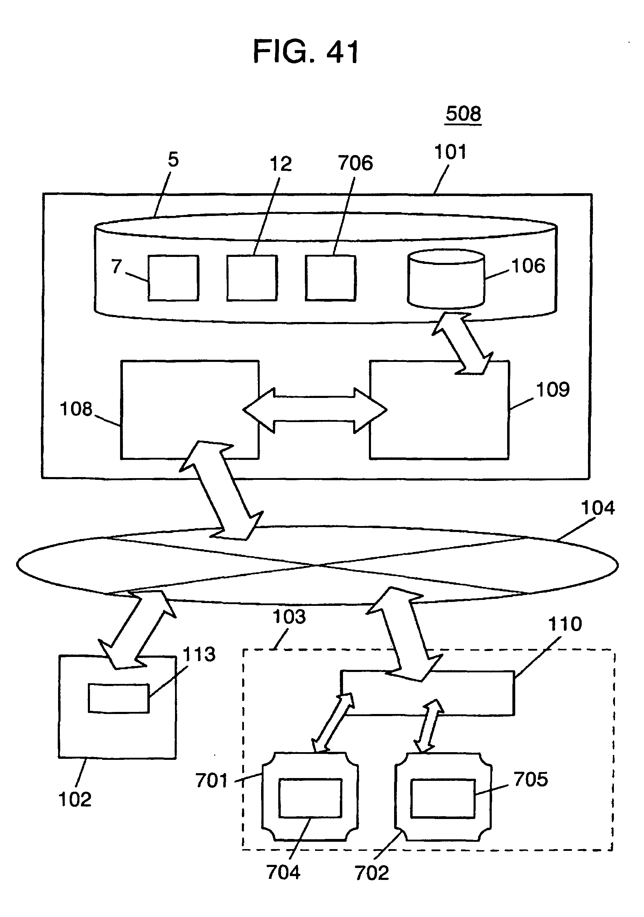

FIG. 40 is a flow chart used to show a process flow for remote-controlling the appliances in the present embodiment 8, while FIG. 41 shows the system structure of the system for controlling appliances.

In FIG. 41, those constituent items having the same functions as those in FIG. 26 are represented by the same symbols, and the description of which is omitted here.

In the system for controlling appliances 508 in the present embodiment 8, a plurality of target appliances is connected to HGW 110. In order to make description simple, FIG. 41 shows only an IP human sensor 701 and an IP camera 702, among the target appliances.

Each of the target appliances is provided with built-in program module 704, 705 used for the control.

Database section 105 of the server 101 in the present embodiment is provided with a complex control specifying table 706 for storing, when a complex control of plural appliances is specified, information about the specified details. Details of the complex control specifying table 706 will be described later.

A method of controlling the appliances in accordance with the present embodiment 8 is described below referring to FIG. 40.

Description is made on an example of setting the control; where, as soon as the IP human sensor 701 installed at entrance, among the target appliances, detects a human being, the IP camera 702 starts to take still images continually at an interval of 5 seconds and save the images.

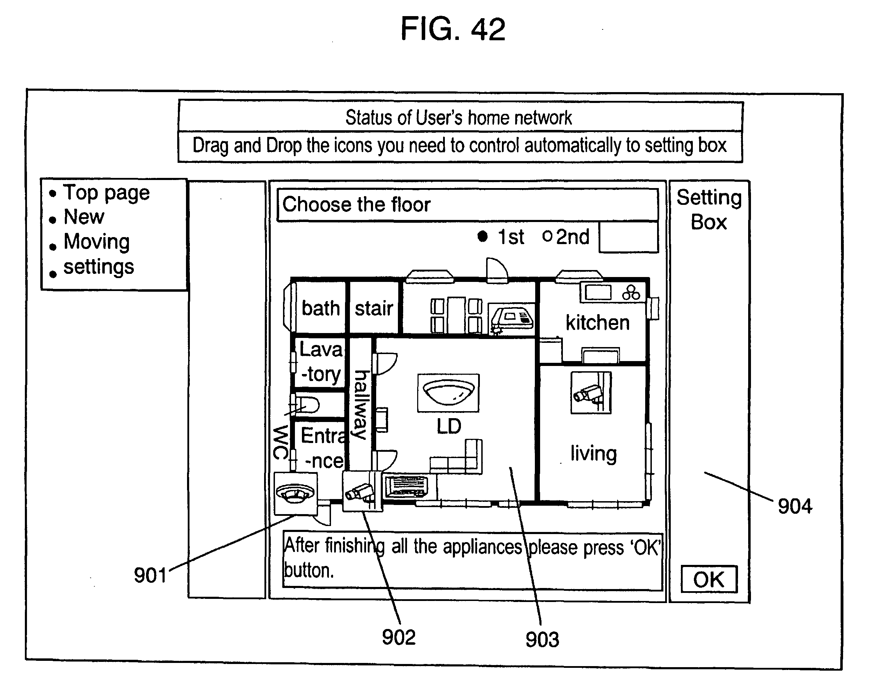

At step S1701, the appliances to which a user making access is entitled to control are extracted from the registered appliances table by means of registered ID of the user. The extracted appliances are exhibited overlapped on a layout drawing taken out of the visual map DB. Thus a Web page as shown in FIG. 42 used for selecting a target appliance is made available in terminal device 102 at the browser display means 113.

In the Web page shown in FIG. 42, the icon images of appliances extracted after referring to the appliances profile table are shown overlapped on a layout drawing 903, which has already been stored in the visual map DB 106. Namely, the icon 901 of IP human sensor and the icon 902 of IP camera are shown, after making reference to such location information as the location X, the location Y and the floor location, etc. stored in the registered appliances table 112.

Now back to the FIG. 40, at step S1702, the user selects a plurality of appliances which are to be operating in the complex control mode.

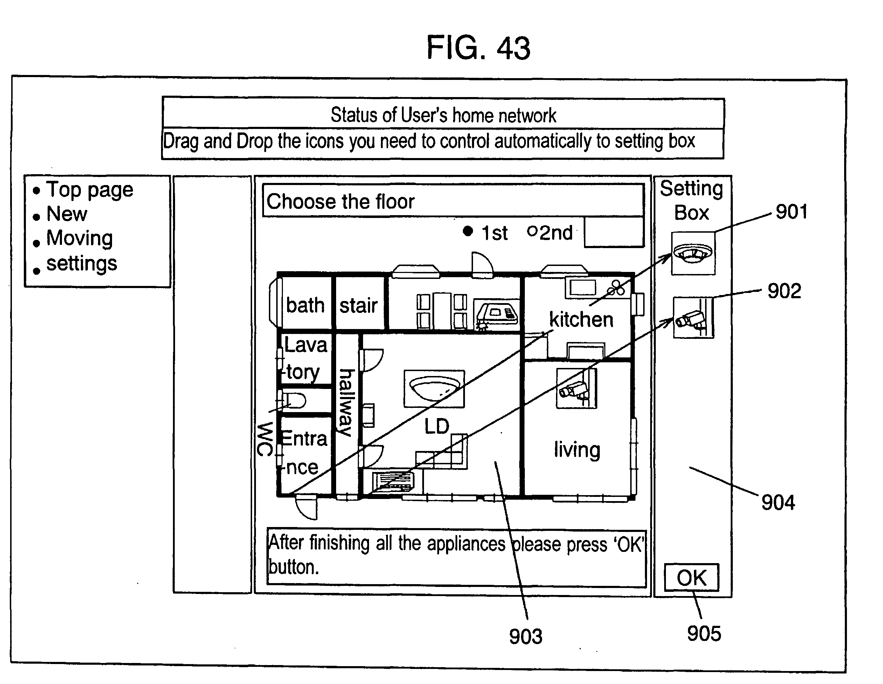

Actual procedure is; dragging the icon 901 of IP human sensor and the icon 902 of IP camera shown in FIG. 43 to a grouping zone 904 (the zone is described as a setting box, in the drawing), and dropping them in there.

At step S1703, whether an OK button 905 is pressed or not is judged; if judged pressed, the selecting operation judged finished and it proceeds to step S1704. If it is judged not to have been finished, it is returned to step S1702. In the present example, the IP human sensor 701 and the IP camera 702 have been selected.

At step S1704, a selection page for specifying the control items is exhibited, with a combination of the appliances selected at step S1702.

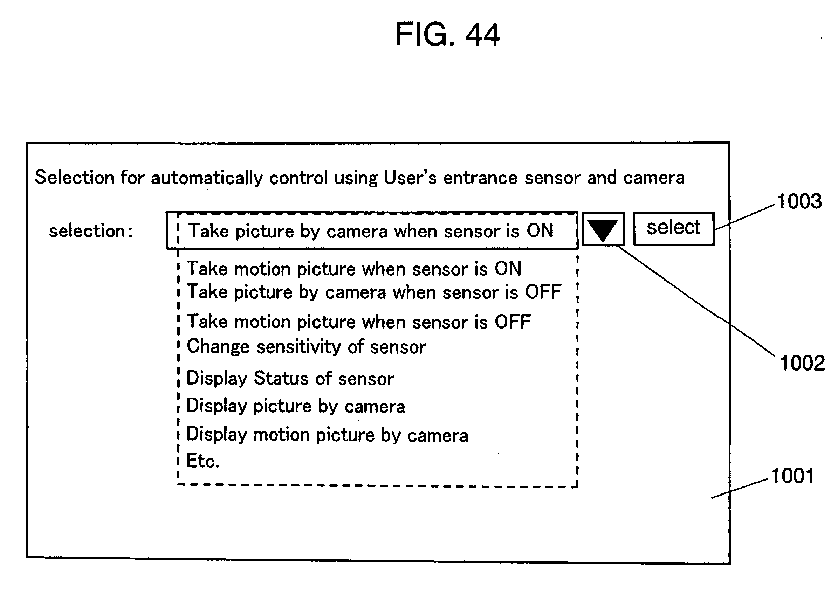

FIG. 44 shows an example 1001 of the above selection page for specifying the control items. Complex operations to be performed by the appliances selected at step S1702 are listed in the page, to be selected by means of a pull down menu 1002.

The complex operations are exhibited by reading out the appliance name stored in the registered appliances table 112 and the function name information stored in the appliances profile table 107, and combining these together.

At the subsequent step S1705, user selects a complex operation by means of the pull down menu 1002, and presses selection button 1003 to finish the selecting work. A complex operation selected in the present example is; entrance camera (IP camera 702) [save still image], upon [ON] of entrance sensor (IP human sensor 701).

At step S1706, a page for specifying the details of the complex operation selected at step S1705 is exhibited to the user.

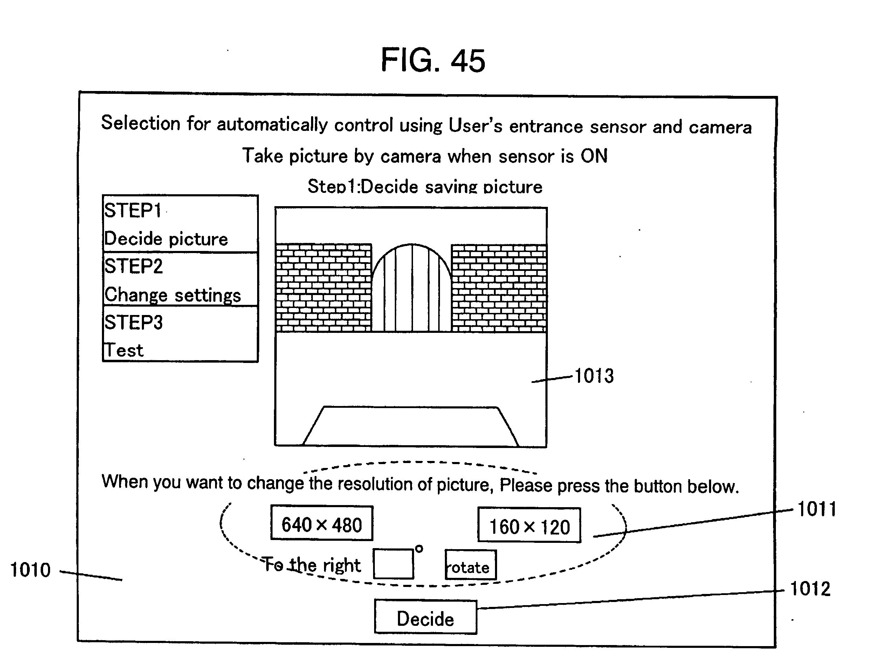

Practically, a page 1010 for specifying the details as shown in FIG. 45 is exhibited in terminal device 102 at the browser display means 113.

In the page 1010 for specifying the details, an image 1013 taken by the IP camera 702 is exhibited.

At step S1707, user presses a detail specifying button 1011 while keep watching the image 1013. Thus the user specifies the resolution, the revolution angle and other details about the images to be saved.

In the present exemplary embodiment, the detail specifying button 1011 is consisting of a plurality of buttons for controlling the IP camera 702. When the detail specifying button 1011 is operated by a user, the appliance URL, which being a network address information specifying IP camera 702 selected from the registered appliances table, added with necessary command is sent to the program module 705 built in the IP camera 702, in the same manner as described in the embodiment 7. The user can see an image 1013 every time when it is taken by IP camera 702 to determine an angle. The specifying operation can be finished by a press of an image decision button 1012.

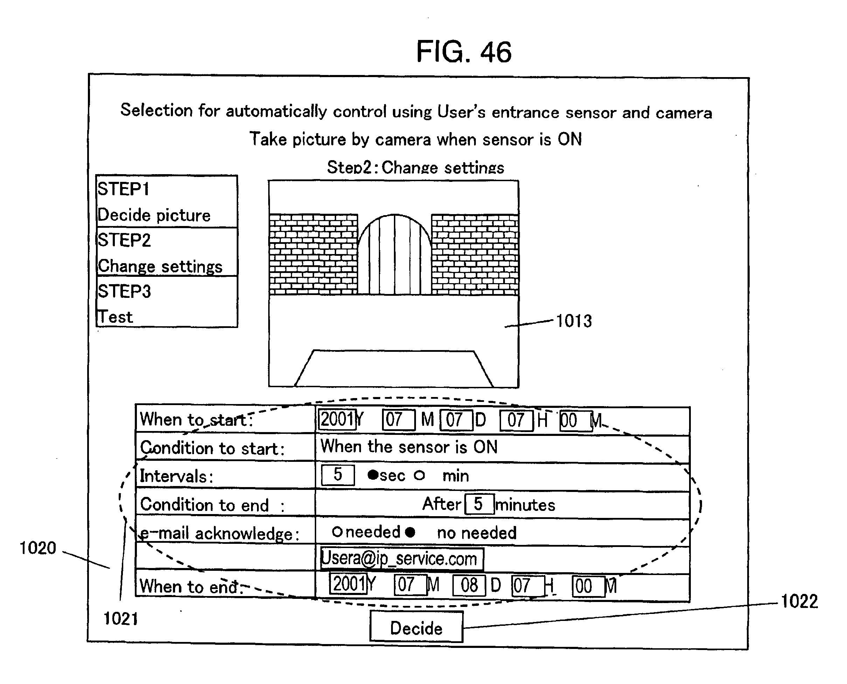

After an image is decided by a press of the image decision button 1012, a page for specifying the automatic complex control as shown in FIG. 46 is exhibited. Describing practically, a text box for inputting the [when to start] of starting the automatic complex control, a text display for displaying predetermined condition [condition to start] which triggers the still image saving, an input text box for inputting [intervals] which indicates the interval time of still image saving, as well as those radio buttons for selecting time unit and related to the need of [e-mail acknowledge] which notifies start of the still images saving, and an input text box for inputting mail address of the notice mail appear in a confirmation window 1021.

User specifies details of the automatic complex control by filling out the text boxes and selecting the radio buttons. Press of a decision button 1022 finishes setting of the detailed conditions; then it proceeds to step S1708.

At step S1708, a confirmation page is exhibited for confirming the specified contents.

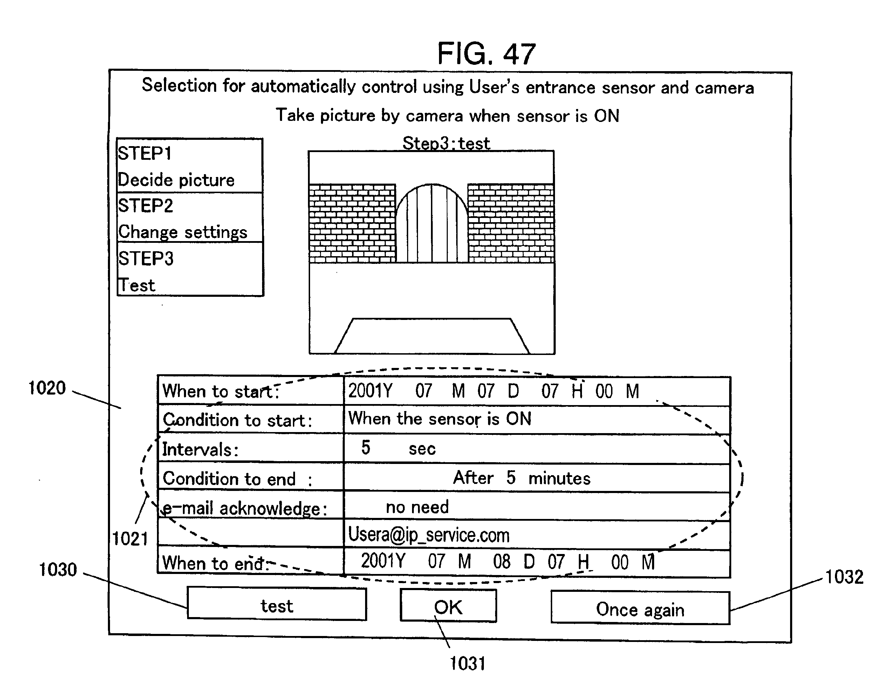

FIG. 47 shows an example of the confirmation page 1020. The page exhibits an image 1013 taken by the IP camera 702 from the angle determined at step S1707, and a confirmation window 1021 in which the specified details are listed in a table.

The confirmation window 1021 shows in the text box those information specified at the page for specifying automatic complex control, FIG. 46. Particulars of the information have already been described at step S1707 in FIG. 40, so the description of which is omitted here.

If a user wishes to make a change, a try-again button 1032 may be pressed to have it returned to the step S1707. There, the user can make the setting once again. After that, if the user is happy with what is shown in the confirmation window 1021, he or she may select an OK confirmed button 1031 to finish the confirmation of specified details.

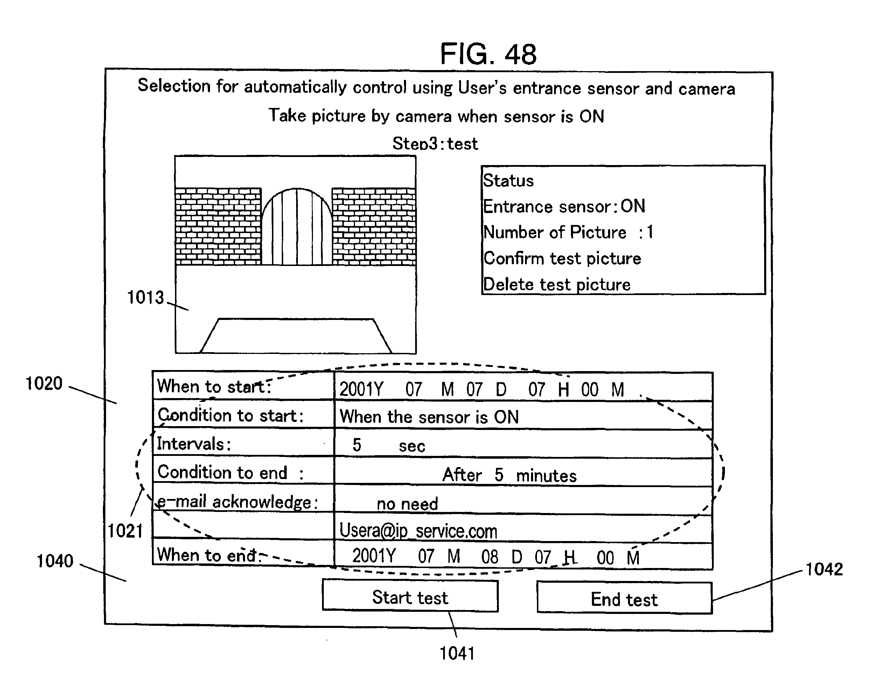

At step S1709, a test operation page 1040 as shown in FIG. 48 is exhibited at a press of an operation test button 1030 of FIG. 47.

If user presses a test operation start button 1041, the test operation is started; it is ended at a press of a test operation end button 1042.

As soon as the test operation is started, present state of the test operation is shown in the test operation page 1040 at the up right corner. State of the entrance sensor, number of still images taken by the entrance camera, confirmation of the images saved in the test operation, elimination of the images saved in the test operation, etc. are exhibited therein.

In a case no test operation is made at step S1709, or the OK confirmed button 1031 is selected at step S1710 after a test operation is performed, the information set at complex control specifying table 706 shown in FIG. 41 is fixed and stored.

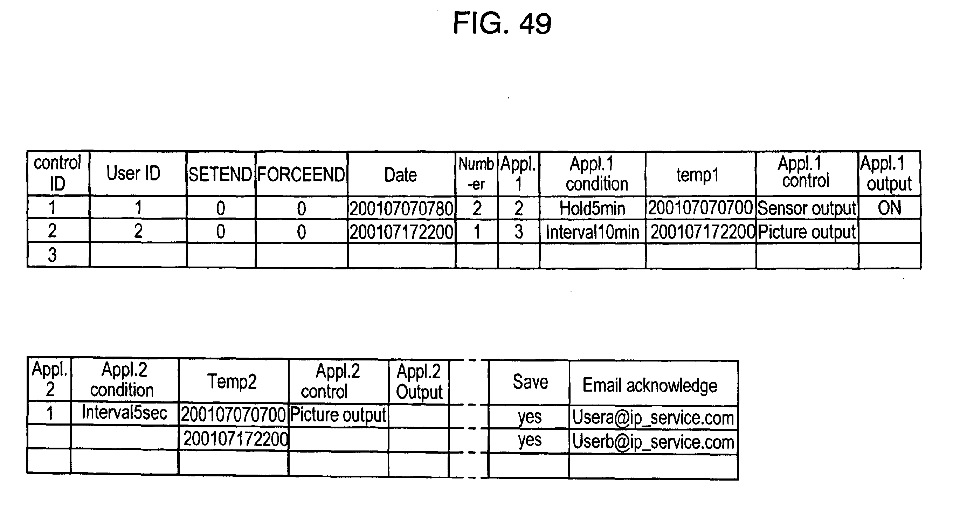

FIG. 49 shows an example of the complex control specifying table 706 in the present invention.

Each of the lines of the complex control specifying table 706 shown in FIG. 49 stores information specified with respect to the complex control.

The Complex control ID represents an ID number given to the complex control in the order of registration, the Registered user ID represents an individual user ID. In the column SETEND, a numeral 1 is written-in after a relevant control operation set therein is totally finished.

In the column FORCEEND, a numeral 1 is written-in when an ongoing control operation set therein is forced to terminate. In the Start date and time[Date], the date and time of control start registered by user is written. In the Appliances count[Number], a number of appliances selected is written. In the column Appliance 1[Appl.1], an appliance ID registered in the registered appliances table 112 corresponding to name of an appliance (e.g. entrance sensor) selected by user among the target appliances is registered. In the Appliance 1 condition[Appl.1 condition], time-wise condition of output from the Appliance 1 is registered; wherein, 'hold' means the time for holding the condition after the value in the column Appliance 1 genuine output [Appl.1 output] is first reached, 'interval' means the output interval time after a first output is generated.

The initial value of [temp1] represents starting date and time. When Appliance 1 outputs the genuine output of Appliance 1 at the Appliance 1 control, the server registers a date and time in the column temp1, which date and time consisting of the time written in the column Appliance 1 condition plus the present date and time. The Appliance 1 control [Appl.1 control] represents name of the function selected by user with the first target appliance. The Appliance 1 genuine output represents genuine value which is applied when the function output written in the column Appliance 1 control is used for the division criterion. The Final output save[Save] shows whether or not the final output result is saved in the server. The Mail notice[Email acknowledge] stores mailing address used when notifying by mail.

The finish date and time is that which is registered by user when the control is finished.

Namely, in the complex control specifying table 706 in FIG. 49, the description in the uppermost line (complex control ID=1) represents the contents of a specified complex control, which is indicating that; it is the case of automatic control ID:1 specified by a registered usera ID:1, from 7:00 hour on July 7 to 7:00 hour on July 8, 2001, still image of entrance camera is saved for 5 min. at an interval 5 sec. upon the output from registered appliance ID:2, a entrance sensor, is turned ON, and the outcome is notified to usera@ip#service.com.

The second line (complex control ID=2) of the complex control specifying table 706 in FIG. 49, indicates a complex control that; it is specified by a registered userb ID:2, from 22:00 hour on July 17 to 8:00 hour on July 18, 2001, still image output from registered appliance ID:3, a living room CAM, is saved at an interval 10 min., and the outcome is notified to userb@ip#service.com.

As described in the foregoing, a terminal device 102 makes access to the server 101, and the server 101 takes part of the entire control of appliances 111, in the present invention. With this system configuration, a complex control of a plurality of appliances 111, which was difficult because of a limitation in the capability with the HGW 110, can be realized with ease by the use of a server 101 that is provided with a high processing capacity.

In the present exemplary embodiment, the complex control of appliances has been specified through the work of drag-and-dropping the icons of a plurality of appliances 111 in the grouping zone. However, the present invention is not limited to the above-described way of operation. The present invention may of course be applied to the complex operation of the appliance; a television receiver at one side and a video recorder at the other side, for example, can be automatically started for a complex operation, such as video-recording, etc. by the work of drag-and-dropping the icons of plurality of appliances 111 in the grouping zone.

In the present exemplary embodiment, the complex control of appliances and the operation have been specified through the work of drag-and-dropping the icons of a plurality of appliances 111 in the grouping zone. However, the apparatus and system for controlling appliances in the present invention is not limited to the above-described way of operation. The present invention may of course be applied to such a structure, where the work for specifying a complex control or operation of appliances is conducted by, for example, drag-and-dropping the icon of one appliance on the icon of other appliance.

### (Embodiment 9)

The system structure of a system for controlling appliances in a ninth exemplary embodiment of the present invention remains the same as that of the system for controlling appliances 508 in the embodiment 8.

The point of difference as compared to the embodiment 8 is that the visual map DB 106 in the present embodiment 9 stores the DXF and the like vector data.

In the present system for controlling appliances, the work for selecting the appliance for complex control is not a user's responsibility. In addition, a complex operation, which was conventionally difficult, can also be performed. Thus the present embodiment provides special advantages, on top of those provided in the embodiments 5 through 8.

Detailed description follows with reference to the drawings.

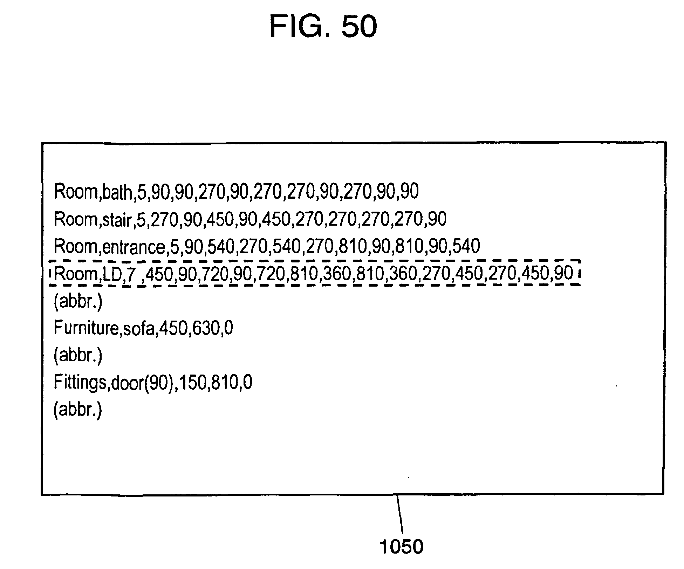

The DXF and the like vector data 1050 in the present embodiment 9 (hereinafter referred to as vector data) is a text data as shown in FIG. 50.

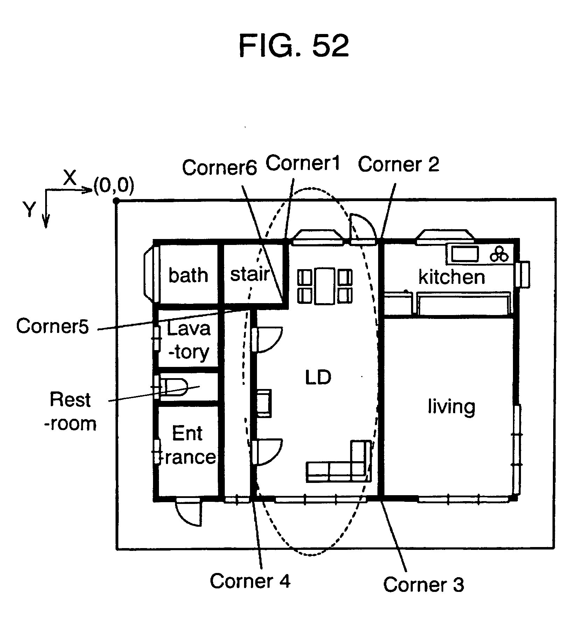

The vector data 1050 in FIG. 50 represents a room layout drawing shown in FIG. 52. This data is telling to a user [usera] the information about appliances placed in first floor of the building, which information is stored in the visual map DB 106 under the file name [useralf.txt]. The file name indicates that it is first floor data of a user [usera].

Each line of the vector data 1050 describes information about respective rooms where the appliance is to be placed.

The portion in FIG. 50 confined by dotted lines is used as an example. It reads;
Room, LD, 7, 450, 90, 720, 90, 720, 810, 360, 810, 360, 270, 450, 270, 450, 90
This data represents the room LD circled with dotted lines, among rooms shown in FIG. 52.

The starting item [ROOM] indicates property of a target object, such as room, while the next item [LD] indicates name of the room.

As to the property of object, if the object is a room it can be [Room], if the object is furniture it can be [Furniture]. Any way, it indicates what the object is.

The next numeral [7] represents the number of room corners plus 1. In the present example, it means that the room of property Room with a name LD has six corners.

The subsequent description [450, 90, 720, 90, 720, 810, 360, 810, 360, 270, 450, 270, 450, 90] indicates, with a couple of numerals, coordinates of each of the corners.

Namely, the first couple of numerals [450, 90] represent the X coordinate and the Y coordinate of the corner 1, with the top left corner of FIG. 52 as the point zero. The next couple [720, 90] represents the corner 2, [720, 810] the corner 3, [360, 810] the corner 4, [360, 270] the corner 5, [450, 270] the corner 6, and the last [450, 90] represents once again the corner 1 coordinates.

By linking these coordinates data; the shape of an object, e.g. target room, is determined.

User can input these data beforehand through the drag-and-drop using a mouse or the like pointing device. Or, it can be read-in from the visual map DB 106.

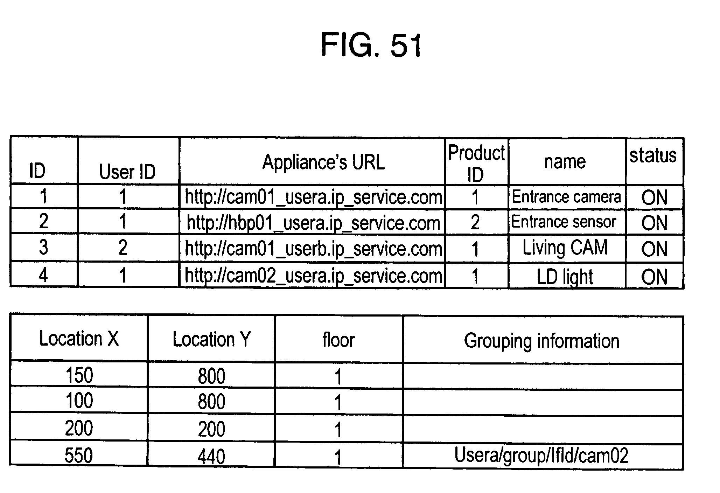

Under the above-configured structure, when an icon of target appliance is disposed to the place by user, the processing means makes reference to the information about location X and location Y in the registered appliances table 112 shown in FIG. 51, and an object, e.g. a room in which the target appliances are placed, is determined by the vector data 1050.

In the bottom line of registered appliances table 112 in FIG. 51, for example, an information usera/group/1f1d/cam02 is stored in the grouping information column of registered appliance ID No. 4.

This indicates the grouping information of a user [usera] is telling that it is the second IP camera for the usera, placed in the 1d at 1F.

Thus the grouping information as to where a target appliance is placed is stored by each of the target appliances. By so doing, when conducting a complex action as exemplified in embodiment 8, only the appliances locating in the same room can be extracted by referring to the grouping information, to facilitate selection of target appliance. This makes it possible to realize a new complex action that was impossible before, at the same time it alleviates the burden of users.

A practical example; suppose an IP camera is installed in a certain room to subdue a doubtful intruder, the IP camera is panning at a regular cycle for detecting a moving object. The direction of panning is stored as panning information in the registered appliances table 112. When a moving object is detected by the IP camera, it acquires information about the relative location between the room in which the IP camera is installed and the surrounding rooms, from the vector data. By making reference to the panning information as of the moment when the moving object was detected, the room where the moving object is detected is made known.

An IP light locating at the room may be set to turn ON, for subduing the intruder.

On top of the advantages as described in the embodiments 5 through 8, a system for controlling appliances in the present embodiment 9 can store any desired information in the registered appliances table 112, such as the information for specifying a room where an appliance is locating, the information about panning of appliance, etc. A combination of these advantages enables a new complex operation integrating individual appliances, which complex operation being impossible under the conventional concepts, without posing too much burden on the user side.

### INDUSTRIAL APPLICABILITY

The present invention offers an apparatus and system for controlling appliances, with which apparatus and system the work for data downloading that arises when a new appliance is added to, the existing appliance is changed, or a controllable function of existing appliance is modified can be reduced to a minimum. Thus the burden levied on the users and system operators is alleviated, and the memory media resources are utilized at a highest efficiency without leaving wasting portion.

## Claims

1. An apparatus for controlling appliances, connectable with a terminal device and a singular or a plurality of appliances, which appliances being target of the control; comprising
memory means storing program components for forming an application which makes said target appliance execute a certain specific function, and
application generation means which selects certain program component from among those stored in said memory means in accordance with instruction sent by said terminal device, which program component being essential for executing a certain specific function of appliance selected by said instruction, and generates a certain specific application.

2. The apparatus for controlling appliances recited in claim 1, wherein
said memory means further comprises a users table storing information for identifying the users, a target appliances table which stores information regarding target appliance by each of said users, and a devices information table which stores information regarding performable function by each of said target appliances; and
said application generation means generates said certain specific application based on information stored in said users table, said target appliances table and said devices information table.

3. The apparatus for controlling appliances recited in claim 1or claim2, wherein
said memory means further comprises a control command table which stores information about control command of each function of said target appliances, and
said application generation means transmits to said selected appliance a control command that conforms to said selected appliance based on information stored in said control command table.

4. The apparatus for controlling appliances recited in any one of claim 1 through claim3, wherein
said terminal device comprises a browser display section, and
said program component contains a button display program for displaying an operation button relevant to said function in said browser display section of said terminal device by each of functions of said target appliances, and a control command program for transmitting control order to said target appliance.

5. The apparatus for controlling appliances recited in claim 4, wherein said control command program is described in PHP language.

6. The apparatus for controlling appliances recited in claim 4 or claim5, wherein said button display program is described in a code that conforms to said browser display section of said terminal device.

7. The apparatus for controlling appliances recited in claim 6, further comprising terminal identifying means for identifying the kind of said terminal device.

8. A system for controlling appliances comprising:
a terminal device;
a singular or a plurality of appliances, which being target of the control;
memory means storing program components to be used for forming an application for executing a certain specific function of said target appliance;
application generation means which selects certain program component from among those stored in said memory means in accordance with instruction sent by said terminal device, which program component being essential for executing a certain specific function of appliance selected by said instruction, and generates a certain specific application; and
a server which transmits control command corresponding to said instruction to said selected appliance.

9. The system for controlling appliances recited in claim 8, wherein
said memory means further comprises a users table storing information for identifying the users, a target appliances table which stores information regarding target appliance by each of said users, and a devices information table which stores information regarding the performable function by each of said target appliances; and
said application generation means generates said certain specific application based on information stored in said users table, said target appliances table and said devices information table.

10. The system for controlling appliances recited in claim 8 or claim9, wherein
said memory means further comprises a control command table which stores information about control command by each function of said target appliances; and
said application generation means transmits to said selected appliance a control command that conforms to said selected appliance based on information stored in said control command table.

11. The system for controlling appliances recited in any one of claim 8 through claim 10, wherein said terminal device and said server are connected via a global network.

12. The system for controlling appliances recited in any one of claim 8 through claim 11, wherein said appliances and said server are connected via a global network.

13. The system for controlling appliances recited in any one of claim 8 through claim 12, wherein said terminal device comprises a browser display section for displaying a Web page.

14. The system for controlling appliances recited in any one of claim 8 through claim 13, wherein said appliances are provided with WWW server.

15. The system for controlling appliances recited in any one of claim 8 through claim 14, wherein
said program component contains a button display program for displaying an operation button relevant to said function in said browser display section of said terminal device by each of functions of said target appliances, and a control command program for transmitting control order to said target appliance.

16. The system for controlling appliances recited in claim 15, wherein said control command program is described in PHP language.

17. The system for controlling appliances recited in claim 15 or claim 16, wherein said button display program is described in a code that conforms to said browser display section of said terminal device.

18. The system for controlling appliances recited in claim 17, further comprising terminal identifying means for identifying the kind of said terminal device.

19. An apparatus for controlling appliances comprising
a registered appliances table which stores information including the network address information and the layout location information about the target appliances;
an appliances profile table which stores information by each of the functions of said appliances, including the control command for executing said function of said appliance, and the icon information of said appliance;
a database section containing a visual map database which stores layout information about a place in which said appliance is to be located;
interface means for transmitting control command to said appliance for controlling said appliance; and
Web page generation means for generating a Web page, by acquiring said layout drawing information from said visual map database, said icon information from said appliances profile table, said location information from said registered appliances table, and displaying the icon image of said appliance overlapped on the drawing of said layout information.

20. The apparatus for controlling appliances recited in claim 19, wherein said layout drawing information is described in the vector data by each of the objects where said appliance is to be located, and said registered appliances table further contains information indicating an object where said appliance is located.

21. The apparatus for controlling appliances recited in claim 19 or claim20, wherein, upon a clicking made on said icon image exhibited in said Web page, said Web generation means generates an appliance-wise Web page containing icon, or button, of controllable functions with said appliance.

22. The apparatus for controlling appliances recited in any one of claim 19 through claim21, wherein said Web generation means generates a page provided for selecting and specifying the control item, with which page a complex control, or specifying of such control, of integrated functions to be performed by collaboration with relevant appliance can be made by drag-and-dropping beforehand the icon image of said relevant appliance in a grouping zone provided in said Web page.

23. The apparatus for controlling appliances recited in any one of claim 19 through claim21, wherein
said Web generation means generates a page provided for selecting and specifying the control item, with which page a complex control, or specifying of such control, of integrated functions to be performed by collaboration of a plurality of appliances can be made by drag-and-dropping icon image of one appliance on other icon image of the other appliance.

24. A system for controlling appliances comprising:
a home gateway connected to a global network;
a singular or a plurality of appliances, which being target of the control, connected to said home gateway forming a local network;
a registered appliances table which can be connected to said global network, which table storing information including the network address information and the location information about said target appliances;
an appliances profile table which stores information by each of the functions of said appliances, including the control command for executing said function of said appliance, and the icon information of said appliance;
a database section containing a visual map database which stores layout information about a place in which said appliance is to be located;
interface means for transmitting control command to said appliance for controlling said appliance;
a server comprising Web page generation means for generating a Web page, by acquiring said layout drawing information from said visual map database, said icon information from said appliances profile table, said location information from said registered appliances table, and displaying the icon image of said appliance overlapped on the drawing of said layout information; and
a terminal device connected to said global network, which terminal device having browser display means which can exhibit said Web page; wherein
said terminal device makes access to said server to have said Web page generated by Web generation means of said server exhibited in said terminal device at the browser display means, and when said terminal device is operated said network address information is referred via interface means of said server and a control command is transmitted to said appliance.

25. The system for controlling appliances recited in claim 24, wherein said layout drawing information is described in the vector data by each of the objects where said appliance is to be located, and said registered appliances table further contains information indicating an object where said appliance is located.

26. The system for controlling appliances recited in claim 24 or claim25, wherein, upon a clicking made on said icon image exhibited in said Web page, said Web generation means generates an appliance-wise Web page containing icon, or button, of controllable functions with said appliance.

27. The system for controlling appliances recited in any one of claim 24 through claim26, wherein said Web generation means generates a page provided for selecting and specifying the control item, with which page a complex control, or specifying of such control, of integrated functions to be performed by collaboration with relevant appliance can be made by drag-and-dropping beforehand the icon image of said relevant appliance in a grouping zone provided in said Web page.

28. The system for controlling appliances recited in any one of claim 24 through claim26, wherein
said Web generation means generates a page provided for selecting and specifying the control item, with which page a complex control, or specifying of such control, of integrated functions to be performed by collaboration of a plurality of appliances can be made by drag-and-dropping icon image of one appliance on other icon image of the other appliance.
